(19) Europäisches Patentamt
European Patent Office
Office européen des brevets

(11) EP 1 640 396 A1

(12) EUROPEAN PATENT APPLICATION
published in accordance with Art. 158(3) EPC

(43) Date of publication:
**29.03.2006 Bulletin 2006/13**

(21) Application number: **04745587.8**

(22) Date of filing: **04.06.2004**

(51) Int Cl.:
***C08G 59/17*** *(1985.01)* ***C08F 299/02*** *(1974.07)*
***G02F 1/1339*** *(1990.01)*

(86) International application number:
**PCT/JP2004/007811**

(87) International publication number:
**WO 2004/108790 (16.12.2004 Gazette 2004/51)**

(84) Designated Contracting States:
**DE FR GB NL**

(30) Priority: **04.06.2003 JP 2003159905**
**04.06.2003 JP 2003159906**
**04.06.2003 JP 2003159909**
**06.06.2003 JP 2003162774**
**10.06.2003 JP 2003165410**
**02.07.2003 JP 2003270397**
**24.07.2003 JP 2003279299**
**31.07.2003 JP 2003284115**
**25.11.2003 JP 2003394614**
**25.11.2003 JP 2003394615**
**25.11.2003 JP 2003394616**
**25.11.2003 JP 2003394617**
**25.11.2003 JP 2003394618**
**25.11.2003 JP 2003394619**

(71) Applicant: **SEKISUI CHEMICAL CO., LTD.**
**Osaka-shi,**
**Osaka 530-8565 (JP)**

(72) Inventors:
- **TANIKAWA, Mitsuru,**
**Sekisui Chemical Co., Ltd.**
**Mishima-gun, Osaka618858 9 (JP)**
- **WATANABE, Takashi,**
**Sekisui Chemical Co., Ltd.**
**Mishima-gun, Osaka618858 9 (JP)**
- **OYAMA, Yuichi,**
**Sekisui Chemical Co., Ltd.**
**Mishima-gun, Osaka 6188589 (JP)**
- **YAMAMOTO, Takuya,**
**Sekisui Chemical Co., Ltd.**
**Mishima-gun, Osaka 6188589 (JP)**
- **UWAGAWA, Sadamu,**
**Sekisui Chemical Co., Ltd.**
**Koka-gun, Shiga 5288585 (JP)**

(74) Representative: **Hart Davis, Jason et al**
**Cabinet Beau de Loménie,**
**158, rue de l'Université**
**75340 Paris Cedex 07 (FR)**

# (54) CURING RESIN COMPOSITION, SEALING MATERIAL FOR LIQUID CRYSTAL DISPLAY DEVICE AND LIQUID CRYSTAL DISPLAY DEVICE

(57) It is the object of the invention to provide a curable resin composition which causes no liquid crystal contamination, which are excellent in the adhesive property to a glass, and which causes no cell gap inequality in the case it is used as a sealant for a liquid crystal display element to produce a liquid crystal display element by a one drop fill process, a sealant for a liquid crystal display element, and a liquid crystal display element. The invention is a curable resin composition, which contains a curable resin to be cured by light and/or heat and a polymerization initiator, the curable resin being a crystalline (meth)acrylic acid-modified epoxy resin comprising a (meth)acrylic group and an epoxy group in one molecule.

[Figure. 1]

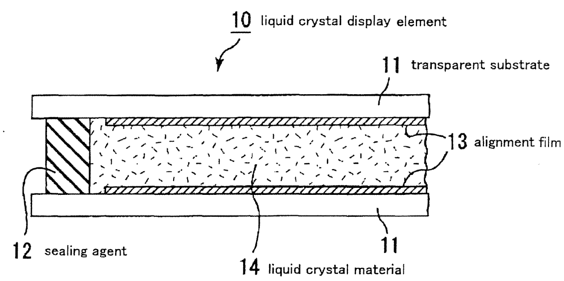


EP 1 640 396 A1

## Description

### TECHNICAL FIELD

The invention relates to a curable resin composition which causes no liquid crystal contamination, which are excellent in the adhesive property to a substrate, and which causes no cell gap inequality in the case it is used as a sealant for a liquid crystal display element to produce a liquid crystal display element by a one drop fill process, a sealant for a liquid crystal display element, and a liquid crystal display element.

### BACKGROUND ART

Conventionally, a liquid crystal display element such as a liquid crystal display cell has been produced by arranging two electrode-having transparent substrates face to face at a prescribed gap, sealing the circumference of the substrates with a sealant of a curable resin composition, curing the sealant to form a cell, injecting a liquid crystal into the cell through a liquid crystal inlet formed in a part of the cell, and sealing the liquid crystal inlet with a sealant or an end-sealant.

That is, at first, a seal pattern having the liquid crystal inlet is formed in one of two electrode-having transparent substrates by screen printing using a heat-curable sealant and subjected to pre-baking at 60 to 100°C to dry a solvent in the sealant. Next, the two substrates are set face to face while sandwiching a spacer, aligned, and stuck to each other, thermally pressed at 110 to 220°C for 10 to 90 minutes for adjusting gap in the periphery of the sealant, and then the sealant is actually cured by heating at 110 to 220°C for 10 to 120 minutes in an oven. Next, a liquid crystal is injected through the liquid crystal inlet and finally the liquid crystal inlet is sealed with an end-sealant to produce a liquid crystal display element.

However, according to this producion method, there are some problems: positioning difference, gap inequality, deterioration of the adhesion property between the sealant and the substrates take place owing to the thermal stress: gap inequality and seal path are caused owing to thermal expansion of the remaining solvent and foams generated thereby: it takes a long time to cure the sealant: the pre-baking step is complicated: the usable time of the sealant is short owing to the evaporation of the solvent: and liquid crystal injection takes a long time. Especially with respect to large scale liquid crystal display elements in recent years, that the liquid crystal injection needs a long time becomes a serious problem.

To deal with these problems, a method of producing a liquid crystal display element, called a one drop fill process, using a photo-curable as well as heat-curable sealant has been investigated. In the one drop fill process, at first, a rectangular seal pattern (a seal part) is formed in one of two electrode-having transparent substrates by screen printing using a sealant. And then, in the state the sealant is not yet cured, small droplets of a liquid crystal are dropped and applied to the entire face within a frame of the transparent substrate and immediately the other substrate is laid over and ultraviolet rays are radiated to the seal part to temporarily cure the sealant. After that, heating is carried out at the time of liquid crystal annealing to actually cure the seal part and thus produce a liquid crystal display element. If the substrates are stuck to each other in reduced pressure, the liquid crystal display element can be produced at an extremely high efficiency. In the future, it is expected that this one drop fill process would become mainstream of a method of producing a liquid crystal display device.

However, there are some problems to overcome in the method of producing a liquid crystal display device by the one drop fill process.

The first problem is a problem of liquid crystal contamination. Since the one drop fill process involves a step of bringing an un-cured sealant into direct contact with the liquid crystal, it becomes a serious problem that the sealant component is eluted to the liquid crystal and contaminates the liquid crystal. In the case the liquid crystal is contaminated, the liquid crystal alignment is disordered in the circumferential part of the sealant and it becomes a cause of display defect such as color inequality.

For example, partially (meth)acrylated bisphenol A type epoxy resins (Patent Documents No. 1 to 5) and (meth)acrylic acid ester resins (Patent Document No. 6) are disclosed as the curable resins in conventional curable resin compositions to be used for sealants, however these curable resins have polarity values close to those of the liquid crystal materials and good affinity and therefore tend to be eluted to the liquid crystals.

Further, polymerization initiators added as active radical generation agents to the sealants also become a cause of liquid crystal contamination. Low molecular weight organic compounds have conventionally been used as the polymerization initiators to be added to the sealants and these polymerization initiators are easy to be eluted to the liquid crystals and further on completion of the polymerization, the residues derived from the polymerization initiators remain, so that the residues are eluted to contaminate the liquid crystals or become an outgas during heating at the time of realignment of the liquid crystals and thus deteriorate the adhesive strength between glass substrates or cause the gap inequality.

To deal with such problems, Patent Document No. 7 discloses a liquid crystal device comprising a transparent polymer

substance obtainable by polymerization of a transparent polymer substance forming material containing a photopolymerizable composition and a (meth)acryloyloxy group-containing photopolymerization initiator supported between two transparent substrates. In this liquid crystal device, since no low molecular weight polymerization initiator is used, residues of the polymerization initiator are hardly eluted to the liquid crystal on completion of the polymerization and thus the problem of occurrence of display defect such as the alignment disorder of the liquid crystal and color inequality is solved to a certain extent. However, the elution prevention of the residues to the liquid crystal is incomplete and additionally, there are problems still remaining that the polymerization initiator is eluted to the liquid crystal when it is brought into contact with the liquid crystal in un-curing state in the one drop fill process and that the residues of the polymerization initiator after curing become an outgas by heating at the time of realignment of the liquid crystal.

Also, an alkoxysilane compound added as the adhesive aid becomes a cause of the liquid crystal contamination. Conventionally, alkoxysilane compounds such as γ-aminopropyltrimethoxysilane, γ-mercaptopropyltrimethoxysilane, γ-glycidoxypropyltrimethoxysilane, and γ-isocyanatopropyltrimethoxysilane have been used as adhesive aids for sealants and these alkoxysilane compounds also have a property of easy elution to the liquid crystals.

The second problem is a problem of adhesive property of a sealant. Generally, a sealant containing an ultraviolet curable resin composition has low adhesive strength to a glass substrate as compared with a conventional sealant containing a heat-curable resin composition. Further, the sealant is improved so as to increase the glass transition temperature of a resin for improvement of the heat resistance, however, the increase of the glass transition temperature of the resin further decreases the adhesive property to the glass substrate. As a method of increasing the adhesive property to the glass substrate has been known a method of adding a silane coupling agent and the like, however, there are problems that not only the effect to increase the adhesive property is insufficient but also the silane coupling agent is eluted to the liquid crystals and contaminates the liquid crystals.

Patent Document No. 8 discloses an epoxy-resin adhesive composition comprising core-shell particles each comprising a core layer of a resin having a glass transition temperature of 45°C and a shell layer of a resin having a glass transition temperature of 105°C. The composition is for improving the impact resistance of the cured resin material by absorbing the impact from the outside by expansion of the rubber component of the core-shell particles by heat at the time of heat-curing reaction of the epoxy resin and accordingly improving the peeling adhesive strength. However, since the method is based on the expansion of the core-shell particles by heating, it is supposed to be ineffective to improve the adhesive property of the ultraviolet-curable resin composition (or, compositions containing together ultraviolet-curable and heat-curable resins to be subjected to the step of ultraviolet-curing at first).

The third problem is a problem of the gap inequality. In the case of producing a liquid crystal display device by the one drop fill process, the curability of conventional sealants by photo-curing is so high and the coefficient of linear expansion after the photo-curing becomes so high as to cause cell gap inequality owing to the misalignment between substrates in some cases.

As described, it has been desired to develop a curable resin composition usable for a sealant for a liquid crystal display element in which the problems of the liquid crystal contamination, the adhesive property of the sealant, and the gap inequality are solved.

Patent Document No. 1: Japanese Kokai Publication Hei-6-160872;
Patent Document No. 2: Japanese Kokai Publication Hei-1-243029;
Patent Document No. 3: Japanese Kokai Publication Hei-7-13173;
Patent Document No. 4: Japanese Kokai Publication Hei-7-13174;
Patent Document No. 5: Japanese Kokai Publication Hei-7-13175;
Patent Document No. 6: Japanese Kokai Publication Hei-7-13174;
Patent Document No. 7: Japanese Kokai Publication Hei-5-264980; and
Patent Document No. 8: Japanese Kokai Publication Hei-7-224144.

DISCLOSURE OF THE INVENTION

PROBLEMS WHICH THE INVENTION IS TO SOLVE

In view of the above-mentioned state of art, it is the object of the invention to provide a curable resin composition which causes no liquid crystal contamination, which are excellent in the adhesive property to a substrate, and which causes no cell gap inequality in the case it is used as a sealant for a liquid crystal display element to produce a liquid crystal display element by a one drop fill process, a sealant for a liquid crystal display element, and a liquid crystal display element.

MEANS FOR SOLVING THE OBJECT

Inventors of the invention have struggled and have made investigations to solve the problem of the liquid crystal contamination and have found that a curable resin composition scarcely contaminating the liquid crystal even if being brought into contact with the liquid crystal in the un-cured state when it is used as a sealant for a liquid crystal display element could be obtained by selecting a specified curable resin, a polymerization initiator, and an adhesive aid and thus have completed the first, the second, and the third inventions. The first invention particularly solves the liquid crystal contamination by a curable resin: the second invention particularly solves the liquid crystal contamination by a polymerization initiator: and the third invention particularly solves the liquid crystal contamination by an adhesive aid. Accordingly, the first to the third inventions may be carried out independently, however in the case these inventions are combined one another, higher effects can be caused.

The first invention is a curable resin composition, which contains a curable resin to be cured by light and/or heat and a polymerization initiator, the curable resin being a (meth)acrylic acid-modified epoxy resin obtainable by reaction of a crystalline epoxy resin and (meth)acrylic acid.

The (meth)acrylic acid-modified epoxy resin has a (meth)acryl group and an epoxy group in one molecule, so that it can be cured by light and heat. Accordingly, if the curable resin composition of the first invention is used as a sealant for a liquid crystal display element, it can be used for temporarily sealing once by light radiation and then actual curing by heating and can preferably be used for producing a liquid crystal display element by the one drop fill process.

It is supposed that since the crystalline epoxy resin to be used as a raw material has a high purity and contains a very slight amount of impurities, such a (meth)acrylic acid-modified epoxy resin scarcely contaminates the liquid crystal. In this description, (meth)acrylic acid means acrylic acid or methacrylic acid. In this description, the crystalline resin means a resin having a sharp and clear melting point peak in the measurement of differential heat by a differential scanning calorimeter and crystallinity exceeding 10% and a non-crystalline resin means a resin having no sharp and clear melting point peak and crystallinity of 10% or lower.

The above-mentioned (meth)acrylic acid-modified epoxy resin is preferable to be crystalline. Since the (meth) acrylic acid-modified epoxy resin has high crystallinity, it is supposed that the intermolecular interaction is high and the epoxy resin scarcely contaminates the liquid crystal even in the case the uncured epoxy resin is brought into contact with the liquid crystal.

The above-mentioned (meth)acrylic acid-modified epoxy resin is preferable to have a melting point of 80°C or lower. If it exceeds 80°C, it is needed to carry out heating at a high temperature at the time of mixing and it sometimes results in occurrence of problems of gelation and the like. A preferable lower limit is 40°C. If it is lower than 40°C, the agglomerating force is deteriorated and the adhesion property of the cured product obtainable by curing the curable resin composition of the invention may be decreased.

The (meth)acrylic acid-modified epoxy resin is preferable to have 5 to 10 sulfur atoms and oxygen atoms in total in the resin skeleton. If it is less than 5, the polarity as molecules is so low as to contaminate the liquid crystal in some cases and if it exceeds 10, the moisture resistance may become low.

The value calculated by dividing the total number of the sulfur atoms and the oxygen atoms in the resin skeleton by the total number of the atoms of the (meth)acrylic acid-modified epoxy resin is preferably in a range from a lower limit of 0.08 to an upper limit of 0.14. If it is less than 0.08, the polarity is so low as to contaminate the liquid crystal in some cases and if it exceeds 0.14, the moisture resistance may become low.

The (meth)acrylic acid-modified epoxy resin can be produced by reaction of the crystalline epoxy resin and (meth)acrylic acid.

The above-mentioned crystalline epoxy resin is not particularly limited and may include bisphenol A type epoxy resins, bisphenol F type epoxy resins, bisphenol S type epoxy resins, hydroquinone type epoxy resins, bisphenyl type epoxy resins, stilbene type epoxy resins, sulfide type epoxy resins, ether type epoxy resins, naphthalene type epoxy resins, and their derivatives.

The crystalline epoxy resin to be used as a raw material is preferable to have a melting point of 140°C or lower. If it exceeds 140°C, the gelation may occurs at the time of modification reaction. The more preferable upper limit is 120°C. A preferable lower limit is 40°C. If it is lower than 40°C, the crystallinity may be decreased.

The method of reacting the (meth)acrylic acid-modified epoxy resin and (meth)acrylic acid is not particularly limited and conventionally known method can be employed.

In the case of reaction of the (meth)acrylic acid-modified epoxy resin and (meth)acrylic acid, it is preferable to use a basic catalyst and the basic catalyst is not particularly limited and examples may include N,N-dimethylphenylamine, triethylamine, triphenylphosphine, iron chloride, zinc chloride, vanadium chloride and the like.

In the case of reaction of the (meth)acrylic acid-modified epoxy resin and (meth)acrylic acid, it is preferable to react (meth)acrylic acid of 1 to 0.5 equivalent to epoxy group of 1 equivalent in the presence of the basic catalyst.

The blending amount of the (meth) acrylic acid-modified epoxy resin in the curable resin composition of the first invention is preferably in a range from a lower limit of 10% by weight to an upper limit of 50% by weight. If it is lower

than 10% by weight, the adhesion property of the cured product may possibly be decreased and if it exceeds 50% by weight, the composition may be crystallized.

In the curable resin composition of the invention, the (meth)acrylic acid-modified epoxy resin may contain other curable resins.

Examples of the curable resins are (meth)acrylic acid esters, ethylene derivatives, styrene derivatives, and epoxy resins. Among them, (meth)acrylic acid esters, epoxy resins, and oxetane resins are preferable since reaction is quickly promoted and the adhesive property is improved.

The curable resins are preferable to have a hydrogen-bonding functional group in a molecule. Owing to that, the bonding property among the curable resins is increased and crystal contamination is scarcely caused even if the curable resins are brought into contact with the crystal. The curable resins are preferable to have two or more addition reactive functional groups in a molecule and more preferable to have not less than two and not more than four such groups. Accordingly, the remaining amount of un-reacted resins after curing can be suppressed the contamination of the liquid crystal with the un-reacted resins can be prevented.

Examples of the (meth)acrylic acid esters are urethane (meth)acrylates having urethane bonds, epoxy (meth) acrylate derived from compounds having glycidyl groups and (meth)acrylic acid, and (meth)acrylates derived from polyols or polyester polyols having three or more OH groups and (meth)acrylic acid in a state that one or more OH groups are left.

Examples of the urethane (meth)acrylates are derivatives derived from diisocyanates such as isophorone diisocyanate and reactive compounds such as acrylic acid and hydroxyethyl acrylate to be reacted with isocyanate by addition reaction. These derivates may be chain-elongated by caprolactone, polyols and the like. Commercialized products of the examples are U-122P, U-340P, U-4HA, and U-1084A (all manufactured by Shin-Nakamura Chemical Co., Ltd.) and KRM 7595, KRM 7610, and KRM 7619 (all manufactured by Daicel UCB Co., Ltd.).

Examples of the epoxy (meth)acrylates are epoxy (meth)acrylates derived from epoxy resins such as bisphenol A type epoxy resins and propylene glycol diglycidyl ethers, and (meth)acrylic acid. Commercialized products of the examples are EA-1020, EA-6320, and EA-5520 (all manufactured by Shin-Nakamura Chemical Co., Ltd.) and Epoxy ester 70PA and Epoxy ester 3002A (both manufactured by Kyoeisha Chemical Co., Ltd.).

Examples of the (meth)acrylates derived from polyols or polyester polyols having three or more OH groups and (meth)acrylic acid in a state that one or more OH groups are left are methyl methacrylate, tetrahydrofurfuryl methacrylate, benzyl methacrylate, isobornyl methacrylate, 2-hydroxyethyl methacrylate, glycidyl methacrylate, (poly)ethylene glycol dimethacrylate, 1,4-butanediol dimethacrylate, 1,6-hexanediol dimethacrylate, trimethylolpropane triacrylate, pentaerythritol triacrylate, glycerin dimethacrylate, and 2-hydroxy-3-acryloyloxypropyl methacrylate.

The above-mentioned epoxy resins are not particularly limited and (meth)acrylic acid-modified epoxy resins and urethane-modified epoxy resins can be exemplified.

Examples of the above-mentioned (meth)acrylic acid-modified epoxy resins are partially (meth)acrylated novolak type epoxy resins, bisphenol type epoxy resins, biphenyl type epoxy resins, naphthalene type epoxy resins, tris (hydroxyphenyl)alkyl type epoxy resins, tetrakis(hydroxyphenyl)alkyl type epoxy resins, and cyclic aliphatic epoxy resins. Among them, partially (meth)acrylated novolak type epoxy resins are preferable. It is because use of a novolak type epoxy resin as a base resin improves the storage stability of the sealant of the invention as compared with use of a straight chain bisphenol type epoxy resin.

Examples of raw material epoxy resins for the (meth)acrylic acid-modified epoxy resin are, as novolak type ones, phenol novolak type ones, cresol novolak type ones, biphenyl novolak type ones, trisphenol novolak type ones, and dicyclopentadiene novolak type ones and as bisphenol type ones, bisphenol A type ones, bisphenol F type ones, 2,2'-diallylbisphenol A type ones, hydrogenated bisphenol type ones, and polyoxypropylene bisphenol A type cyclic aliphatic epoxy resins. They may be used alone or two or more of them may be used in combination.

Examples of commercialized products of the epoxy resins are, as the bisphenol A type epoxy resins, Epikote 828, Epikote 834, Epikote 1001, and Epikote 1004 (all manufactured by Japan Epoxy Resin Co., Ltd.) and Epiclon 850, Epiclon 860, and Epiclon 4055 (all manufactured by Dainippon Ink and Chemicals Inc.); as the bisphenol F type epoxy resins, for example, Epikote 807 and (manufactured by Japan Epoxy Resin Co., Ltd.) and Epiclon 830 (manufactured by Dainippon Ink and Chemicals Inc.); as the phenol novolak type epoxy resins, for example, Epiclon N-740, N-770, and N-775 (manufactured by Dainippon Ink and Chemicals Inc.) and Epikote 152, and 154 (manufactured by Japan Epoxy Resin Co., Ltd.); and as cresol novolak type ones, for example, Epiclon N-660, N-665, N-670, N-673, N-680, N-695, N-665-EXP, and N-672-EXP (manufactured by Dainippon Ink and Chemicals Inc .) .

Examples of the cyclic aliphatic epoxy resins are Celloxide 2021, Celloxide 2080, and Celloxide 3000 (all manufactured by Daicel UBC Co., Ltd.) and examples of the partially (meth)acrylated epoxy resins are those obtained by reaction of the epoxy resins and (meth)acrylic acid by conventional methods in the presence of a basic catalyst.

The epoxy resins with a desired acrylation ratio can be obtained by properly changing the blending amounts of the above-mentioned epoxy resins and the blending amounts of (meth)acrylic acid. Practically, it is preferable that the blending amount of the carboxylic acid is in a range from a lower limit of 0.1 equivalent to an upper limit of 0.5 equivalent to the epoxy group of 1 equivalent and it is more preferable in a range from a lower limit of 0.2 equivalent to

an upper limit of 0.4 equivalent.

. Examples of the above-mentioned urethane-modified (meth)acrylic epoxy resins are those obtained by causing reaction of polyols and bi- or higher functional isocyanates and further causing reaction of the products with hydroxyl group-containing (meth)acrylic monomers and glycidols and those obtained by causing reaction of bi- or higher functional isocyanates with hydroxyl group-containing (meth)acrylic monomers and glycidols without using the polyols and may further include those obtained by causing reaction of isocyanate group-containing (meth)acrylate monomers with glycidol. In practicular, for example, at first trimethylolpropane 1 mole and isophorone diisocyanate 3 mole are reacted to each other in the presence of a tin type catalyst. The isocyanate groups remaining in the obtained compounds are reacted with hydroxyethyl acrylate, a hydroxyl group-containing acrylic monomer, and a glycidol, a hydroxyl group-containing epoxy to obtain the above-mentioned urethane-modified (meth)acrylic epoxy resins.

Examples of the above-mentioned polyols are not particularly limited and may include ethylene glycol, glycerin, sorbitol, trimethylolpropane, and (poly)propylene glycol.

The isocyanates are not particularly limited if they are bi- or higher functional and examples may include isophorone diisocyanate, 2,4-tolylene diisocyanate, 2,6-tolylene diisocyanate, hexamethylene diisocyanate, trimethylhexamethylene diisocyanate, diphenylmethane-4,4-diisocyanate (MDI), hydrogenated MDI, polymeric MDI, 1,5-naphthalene diisocyanate, norbornane diisocyanate, tolidine diisocyanate, xylylene diisocyanate (XDI), hydrogenated XDI, lysine diisocyanate, triphenylmethane triisocyanate, tris(isocyanatophenyl) thiophosphate, tetramethylxylene diisocyanate, and 1,6,10-undecane triisocyanate.

The above-mentioned hydroxyl group-containing (meth)acrylic acid ester monomers are not particularly limited and examples may include mono(meth)acrylates of divalent alcohols such as ethylene glycol, propylene glycol, 1,3-propanediol, 1,3-butanediol, 1,4-butanediol, and polyethylene glycol; mono(meth)acrylates and di(meth)acrylates of trivalent alcohols such as trimethylolethane, trimethylolpropane and glycerin; and epoxy acrylates such as di(meth)acrylates and bisphenol A-modified epoxy acrylates. They may be used alone or two or more of them may be used in combination.

The second invention is a curable resin composition, which contains a curable resin to be cured by light and/or heat and a polymerization initiator, the polymerization initiator is a radical polymerization initiator having a radical polymerization initiating group to be dissociated into two active radical species by light and/or heat radiation and a hydrogen-bonding functional group in one molecule.

With respect to the radical polymerization initiator, the radical polymerization initiating group means a functional group for starting radical polymerization reaction while being dissociated into two active radical species by light and/or heat radiation. Especially, a radical polymerization initiator having a radical polymerization initiating group to be dissociated into two active radical species by light is preferably used to the one drop fill process and therefore preferable. Examples of such a radical polymerization initiating group are carbonyl groups, sulfur-containing groups, azo groups, and organic peroxide-containing groups and among them groups having the structures represented by the following general formulas (1) to (6) are preferable.

[Chem. 1]

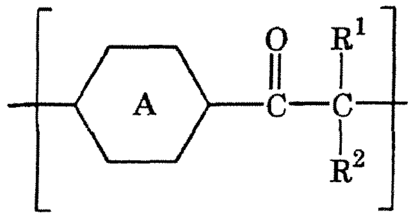

(1)

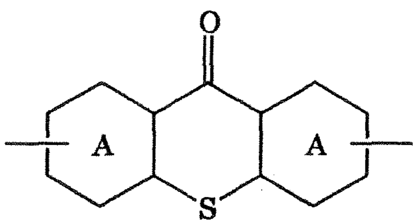

(2)

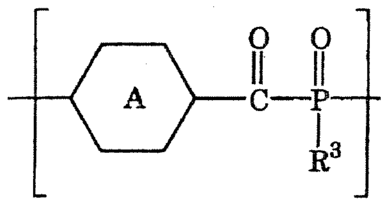

(3)

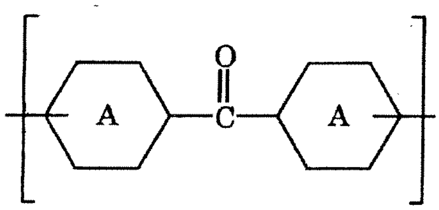

(4)

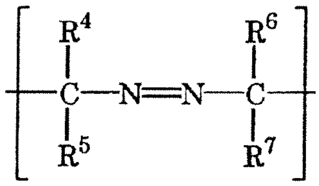

(5)

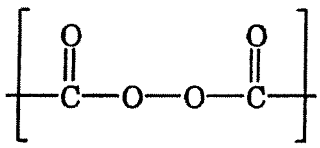

(6)

In the general formulas (1) to (6), $R^1$, $R^2$, and $R^3$ independently represent an alkyl having 1 to 6 carbon atoms, a hydrogen atom, a hydroxyl group, an alkoxyl group having 1 to 6 carbon atoms, a (meth)acryl group, or a phenyl group; $R^4$ , $R^5$, $R^6$ , and $R^7$ independently represent a cyano group or an alkyl group having 1 to 6 carbon atoms, a hydrogen atom, hydroxyl, an alkoxyl group having 1 to 6 carbon atoms, a (meth)acryl group, or an aromatic ring optionally having an alkyl group having 1 to 6 carbon atoms or a halogen group;

[Chem. 2]

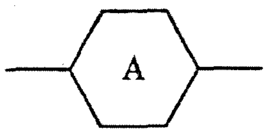

represents an aromatic ring optionally having an alkyl group having 1 to 6 carbon atoms or a halogen group.

Among them, the groups having the structures represented by the above-mentioned general formulas (1) to (4) which are dissociated into active radical species by absorbing relatively weak light are more preferable and the groups

having the structure represented by the general formula (1) are more preferable in terms of the active radical generation efficiency.

The above-mentioned hydrogen-bonding functional group is not particularly limited if it is a functional group or a residual group having a hydrogen-bonding function and examples are an OH group, a $NH_2$ group, a NHR group (R represents an aromatic or aliphatic hydrocarbon and its derivative), a COOH group, a $CONH_2$ group, a NHOH group, and groups having residual groups such as a NHCO bond, a NH bond, a CONHCO bond, and a NH-NH bond.

Since the radical polymerization initiator has such a hydrogen-bonding functional group, even in the case the uncured curable resin composition of the second invention is brought into contact with a liquid crystal, the radical polymerization initiator is hardly eluted and liquid crystal contamination is scarcely caused.

The above-mentioned radical polymerization initiator is preferable to contain two or more hydrogen-bonding functional groups in one molecule. Also, the both of two active radical species generated by dissociation of the radical polymerization initiating group by light and/or heat radiation are preferable to have at least one hydrogen-bonding functional group. That is, the above-mentioned hydrogen-bonding functional group is preferable to be arranged in a molecule so as to make the active radical species have at least one hydrogen-bonding functional group in the case the radical polymerization initiating group is dissociated into two active radical species by light and/or heat. Accordingly, with respect to all of the produced active radical species, even if being brought into contact with a liquid crystal, the polymerization initiator can stay in the curable resin composition and therefore the polymerization initiator is hardly eluted to the liquid crystal and the liquid crystal contamination is scarcely caused.

The above-mentioned radical polymerization initiator is further preferable to contain two or more reactive functional groups in one molecule. Owing to existence of the reactive functional groups in a molecule, the above-mentioned radical polymerization initiator forms copolymers with the curable resin and is fixed, so that even after completion of the polymerization, the residues of the polymerization initiator is not eluted to a liquid crystal and does not become an outgas by heating at the time of realignment of the liquid crystal.

The above-mentioned reactive functional group is not particularly limited if it is a functional group capable of forming a bond with the curable resin which will be described later by polymerization reaction and examples are cyclic ether groups such as epoxy groups and oxetanyl groups, (meth)acryl groups, and styryl groups. Among them, (meth) acryl groups or epoxy groups are preferable.

Among two or more reactive functional groups of the above-mentioned radical polymerization initiator, at least one is preferable to be (meth)acryl and at least one is preferable to be a cyclic ether group.

Also, both of the active radical species produced by dissociation of the radical polymerization initiating group by radiating light and/or heat are preferable to have at least one reactive functional group. That is, the above-mentioned reactive functional group is preferable to be so arranged in a molecule as to make both active radical species contain at least one reactive functional group in the case the radical polymerization initiating group is dissociated into the two active radical species by light and/or heat. Accordingly, all of the generated active radical species form copolymers with the curable resin and are fixed and therefore, the residues of the polymerization initiator are not eluted to a liquid crystal after completion of the polymerization and do not become an outgas by heating at the time of liquid crystal realignment.

The above-mentioned radical polymerization initiator is preferable to have a number average molecular weight of 300 as a lower limit. If it is less than 300, the radical polymerization initiating component is eluted to a liquid crystal and sometimes makes alignment of the liquid crystal easy to be disordered. Its upper limit is preferably 3000. If it exceeds 3000, it becomes difficult to adjust the viscosity of the curable resin composition of the second invention.

The above-mentioned radical polymerization initiator is preferable to have a molar absorbance coefficient of 200 to 10,000 $M^{-1} \cdot cm^{-1}$ at 350 nm measured in acetonitrile. If it is less than 200 $M^{-1} \cdot cm^{-1}$, when the initiator is used as a sealant for a liquid crystal display element, sufficient curing cannot be carried out unless high energy beam with shorter than 350 nm wavelength is radiated and radiation of such high energy beams sometimes deteriorates the liquid crystal and the alignment film. If it exceeds 10,000 $M^{-1} \cdot cm^{-1}$, in the case the initiator is used as a sealant for a liquid crystal display element, only the surface is cured first when ultraviolet rays with about 350 nm wavelength are radiated and the inside cannot be cured sufficiently in some cases. It is more preferably 300 to 3,000 $M^{-1} \cdot cm^{-1}$.

In this description, the molar absorbance coefficient means the value, ε ($M^{-1} \cdot cm^{-1}$) determined by the formula of Lambert-Beer represented by the following equation (7) with respect to an acetonitrile solution containing the radical polymerization initiator.

[Math. 1]

$$\log(I_0/I) = \varepsilon cd \qquad (7)$$

in the formula (7), I represents the intensity of the transmitted light; $I_0$ represents the intensity of the transmitted light of

the pure acetonitrile medium; c represents mole concentration (M), d represents the thickness (cm) of the solution; and $\log(I_0/I)$ represents the absorbance.

The radical polymerization initiator is preferable to have a molar absorbance coefficient of 100 $M^{-1} \cdot cm^{-1}$ or lower at 430 nm measured in acetonitrile. If it exceeds 100 $M^{-1} \cdot cm^{-1}$, the active radicals are generated by light with wavelength in a visible light region and the handling property of the initiator very difficult.

A method of producing the above-mentioned radical polymerization initiator is not particularly limited and conventionally known methods can be employed and examples are a method of (meth)acryl-esterification of an alcohol derivative having two or more radical polymerization initiating groups and hydroxyl groups in a molecule by (meth)acrylic acid or (meth)acrylic acid chloride; a method of causing a reaction of a compound having two or more radical polymerization initiating groups together with hydroxyl groups or amino groups with one epoxy group of a compound having two or more epoxy groups in a molecule; a method of causing a reaction of a compound having two or more radical polymerization initiating groups together with hydroxyl groups or amino groups with one epoxy group of a compound having two or more epoxy groups in a molecule and further causing a reaction of the remaining epoxy groups with (meth)acrylic acid, or a (meth)acrylic acid ester monomer having an activated hydrogen-containing group, a styrene monomer and the like; a method of reaction of a compound having two or more radical polymerization initiating groups together with hydroxyl groups or amino groups with a cyclic ester compound or a carboxylic acid compound having a hydroxyl group and further (meth)acryl-esterifying the hydroxyl group; and a method of synthesizing an urethane derivative from a compound having two or more radical polymerization initiating groups together with hydroxyl groups or amino groups and a bi-functional isocyanate derivative and further causing a reaction of the other isocyanate with (meth)acrylic acid, a glycidol, a (meth)acrylic acid ester monomer having an activated hydrogen-containing group, a styrene monomer and the like.

Examples of the compound having two or more epoxy groups are bi-functional epoxy resin compounds.
The above-mentioned bi-functional epoxy resin compounds are not particularly limited and examples are bisphenol A type epoxy resins, bisphenol F type epoxy resins, bisphenol AD type epoxy resins, epoxy resins obtained by hydrogenation of these epoxy resins, novolak type epoxy resins, urethane-modified epoxy resins, nitrogen-containing epoxy resins obtained by epoxylation of meta-xylenediamine, rubber-modified epoxy resins containing polybutadiene, nitrile butadiene rubber (NBR) and the like. These bi-functional epoxy resin compounds may be in solid state or liquid state.

The hydroxyl group-containing (meth)acrylic acid ester monomers are not particularly limited and examples are mono(meth)acrylates of divalent alcohols such as ethylene glycol, propylene glycol, 1,3-propanediol, 1,3-butanediol, 1,4-butanediol, and polyethylene glycol and mono(meth)acrylates and di(meth)acrylates of trivalent alcohols such as trimethylolethane, trimethylolpropane and glycerin. They may be used alone or two or more of them may be used in combination.

Examples of the above-mentioned bi-functional isocyanate derivatives are diphenylmethane diisocyanate (MDI), tolylene diisocyanate (TDI), xylene diisocyanate (XDI), isophorone diisocyanate (IPDI), naphthylene diisocyanate (NDI), tolidine diisocyanate (TPDI), hexamethylene diisocyanate (HDI), dicyclohexylmethane diisocyanate (HMDI), and trimethylhexamethylene diisocyanate (TMHDI).

A preferable lower limit of a blending amount of the above-mentioned radical polymerization initiator in the curable resin composition of the second invention is 0.1 parts by weight and a preferable upper limit of that is 15 parts by weight, respectively, to the curable resin 100 parts by weight. If it is less than 0.1 parts by weight, the curable resin composition of the second invention cannot sufficiently be cured in some cases and if it exceeds 15 parts by weight, the storage stability may possibly be deteriorated in some cases. A more preferable lower limit is 1 part by weight and a more preferable upper limit is 7 parts by weight.

The curable resin composition of the invention may contain other radical polymerization initiators other than the above-mentioned radical polymerization initiator. Such other radical polymerization initiators are not particularly limited if they are compounds capable of generating radicals by light and/or heat.
The radical polymerization initiator capable of generating radicals by heat may include, for example, peroxides such as lauroyl peroxide, benzoyl peroxide, and dicumyl peroxides; and azo compounds such as azobisiso butyronitrile.
The radical polymerization initiator capable of generating radicals by light may include, for example, acetophenone compounds, benzophenone compounds, benzoin compounds, benzoin ether compounds, acylphosphine oxide compounds, and thioxanthone compounds. In particular, examples are benzophenone, 2,2-diethoxyacetophenone, benzyl, benzoyl isopropyl ether, benzyl dimethyl ketal, 1-hydroxycyclohexyl phenyl ketone, and thioxanthone. These radical polymerization initiators may be used alone or two or more of them may be used in combination.

A preferable lower limit of the blending amount of other radical polymerization initiators in the curable resin composition of the invention is 0.1 parts by weight and a preferable upper limit is 10 parts by weight, respectively to the curable resin 100 parts by weight. If it is less than 0.1 parts by weight, the curing is sufficient in some cases and if it exceeds 10 parts by weight, the radical polymerization initiators may remain and possibly contaminate a liquid crystal. A more preferable lower limit is 1 part by weight and a more preferable upper limit is 5 parts by weigh.

The third invention is a curable resin composition, which contains a curable resin to be cured by light and/or

heat, a polymerization initiator and an adhesive aid, the adhesive aid being an alkoxysilane compound having a molecular weight of 500 or higher and/or an alkoxysilane compound having a molecular weight of 200 or higher and a hydrogen-bonding functional group value of $2\times10^{-3}$ to $7\times10^{-3}$ mol/g.
The above-mentioned alkoxy silane compound is a compound represented by the following general formula (8).
[Chem. 3] $-Si(OR^1)_nR^2_{(3-n)}$ (8)

In the formula (8), $R^1$ and $R^2$ independently represent a hydrocarbon group and a hydrogen atom and are preferably a methyl group, an ethyl group, or a propyl group; and n is an integer of 1 to 3.
The curable resin composition of the third invention containing an alkoxysilane compound having a molecular weight of 500 or higher among those alkoxysilane compounds does not cause liquid crystal contamination attributed to the adhesive aid even if the composition is used as a sealant for a liquid crystal display element for producing a liquid crystal display element by a one drop fill process.
The alkoxysilane compound having a molecular weight of 500 or higher is not particularly limited and examples of the compound are tris(3-trimethoxysilylpropyl) isocyanurate, N-triethoxysilylpropylquinine urethane, (tridocafluoro-1,1,2,2-tetrahydrooctyl)triethoxysilane, (heptadacafluoro-1,1,2,2-tetrahydrodecyl)triethoxysilane, bis[(3-methyldimethoxysilyl)propyl]polypropylene oxide, and bis(pentanedionate)titanium-O,O'-bis(oxyethyl)aminopropyltriethoxysilane. Commercialized products manufactured by Chisso Corporation, "Compoceran E 202" manufactured by Arakawa Chemical Industries, Ltd. and the like may be used and also those which are produced from alkoxysilanes having reactive groups and/or polymerizable groups for these alkoxysilane compounds.
The curable resin composition of the third invention containing an alkoxylsilane compound having a molecular weight of 200 or higher and a hydrogen-bonding functional group value of $2\times10^{-3}$ to $7\times10^{-3}$ mol/g among those alkoxysilane compounds does not cause liquid crystal contamination attributed to the adhesive aid even if the composition is used as a sealant for a liquid crystal display element for producing a liquid crystal display element by a one drop fill process. The above-mentioned hydrogen-bonding functional group value can be calculated according to the following formula (9).
[Math. 2]

$$\text{Hydrogen-bonding functional group value (mol/g)} = \text{(number of the hydrogen-bonding functional groups in one molecule)/molecular weight} \quad (9)$$

The hydrogen-bonding functional group in the above-mentioned alkoxysilane compounds is not particularly limited if it is a functional group or a residual group having a hydrogen bonding property other than a $-NH_2$ group and examples are functional groups such as an -OH group, a -SH group, a -NHR group(R represents an aromatic hydrocarbon group, an aliphatic hydrocarbon group, or their derivatives); a -COOH group, and a -NHOH group or a residual groups remaining in a molecule such as a -NHCO-, a -NH-, a -CONHCO-, a -NH-NH- and the like.
The alkoxylsilane compound having a molecular weight of 200 or higher and a hydrogen-bonding functional group value of $2\times10^{-3}$ to $7\times10^{-3}$ mol/g is not particularly limited and examples are N-(3-acryloxy-2-hydroxypropyl)-3-aminopropyltriethoxysilane, 3-(N-allylamino)propyltrimethoxysilane, bis(2-hydroxyethyl)-3-aminopropyltriethoxysilane, bis[3-(triethoxysilyl)propyl]urea, bis(trimethoxysilylpropyl)amine, bis[3-(trimethoxysilyl)propyl]ethylenediamine, 3-(2,4-dinitrophenylamino)propyltriethoxysilane, N-(hydroxyethyl)-N-methylaminopropyltrimethoxysilane, 2-hydroxy-4-(3-triethoxypropoxy)diphenyl ketone, 3-mercaptopropyltrimethoxysilane, O-(methacryloxyethyl)-N (triethoxysilylpropyl) urethane, N-(3-methacryloxy-2-hydroxypropyl)-3-aminopropyltriethoxysilane, N-phenylaminopropyltrimethoxysilane, N-1-phenylethyl-N'-triethoxysilylpropylurea, O-(propargyloxy)-N-(triethoxysilylpropyl)urethane, (3-triethoxysilylpropyl)-t-butyl carbamate, N-(3-triethoxysilylpropyl)-4-hydroxybutylamide, (S)-N-triethoxysilylpropyl-O-menthocarbamate, 3-(triethoxysilylpropyl)-p-nitrobenzamide, N-(triethoxysilylpropyl)-O-polyethylene oxide urethane, N-triethoxysilylpropylquinine urethane, N-triethoxysilylpropylquinine urethane, N- [5-(trimethoxysilyl)-2-aza-2-oxo-pentyl]caprolactam, and O-(vinyloxyethyl)-N-(triethoxysilylpropyl)urethane.
Commercialized products manufactured by Chisso Corporation and the like may be used for these alkoxylsilane compounds having a molecular weight of 200 or higher and a hydrogen-bonding functional group value of $2\times10^{-3}$ to $7\times10^{-3}$ mol/g. Also, these alkoxysilane compounds may be synthesized from commercialized alkoxysilanes having reactive functional groups such as a $NH_2$ group, a NCO group, an acryloyl group, an epoxy group. Examples of the synthesized alkoxysilane compounds are equimolecular reaction products of 3-aminopropyltrimethoxysilane and Karenz

MOI (manufactured by Showa Denko K.K.); equimolecular reaction products of 3-aminopropyltrimethoxysilane and Epikote 828 (manufactured by Japan Epoxy Resin Co., Ltd.); equimolecular reaction products of 3-aminopropyltrimethoxysilane and 3-acryloxypropyltrimethoxysilane; equimolecular reaction products of 3-isocyanatopropyltriethoxysilane and 2-hydroxyethylacrylic acid ester resin; equimolecular reaction products of 3-isocyanatopropyltriethoxysilane and 3-mercaptopropyltrimethoxysilane; equimolecular reaction products of 3-isocyanatopropyltriethoxysilane and 3-glycidoxypropyltrimethoxysilane; equimolecular reaction products of 3-glycidoxypropyltrimethoxysilane and 2-hydroxyethylacrylic acid ester resin; and equimolecular reaction products of 3-glycidoxypropyltrimethoxysilane and 3-mercaptopropyltrimethoxysilane.

The above-mentioned alkoxysilane compounds having a molecular weight of 500 or higher and alkoxylsilane compounds having a molecular weight of 200 or higher and a hydrogen-bonding functional group value of $2\times10^{-3}$ to $7\times10^{-3}$ mol/g may be used alone or two or more of them may be used in combination.

The above-mentioned alkoxysilane compounds are preferable to have at least one polymerizable functional group and/or reactive functional group. Accordingly, at the time of curing the curable resin composition of the third invention, the above-mentioned alkoxysilane compounds are taken in the cured product and thus prevented from elution to a liquid crystal after curing.

The above-mentioned polymerizable functional group and reactive functional group are not particularly limited if they are radical polymerizable, cation polymerizable, or anion polymerizable functional groups, or reactive functional groups reactive with an active hydrogen.

Examples of the above-mentioned polymerizable functional group are an acryloyl group, a methacryloyl group, an epoxy group, and a vinyl group. Examples of the reactive functional group reactive with an active hydrogen are an isocyanate group, an acryloyl group, a methacryloyl group, and an epoxy group. Among them, at least one selected from a group consisting of an epoxy group, an acryloyl group, and a methacryloyl group is preferable since it is cured together with a common sealant curing component and therefore scarcely eluted to a liquid crystal.

The blending amount of the above-mentioned alkoxysilane compounds in the curable resin composition of the third invention is preferably in a range from a lower limit of 0.1 parts by weight to an upper limit of 2 parts by weight to the curable resin 100 parts by weight. If it is less than 0.1 parts by weight, the curable resin composition cannot sufficiently exhibit the adhesive strength and water resistance in some cases and if it exceeds 20 parts by weight, the curable resin composition may possibly lose the basic function of the curable resin composition such as curable property.

The inventors of the invention have struggled and have made investigations to solve the problem of the adhesive property of a sealant and have found that addition of a resin fine particles having a specified core-shell structure to a curable resin composition having a specified glass transition temperature in form of a cured product after curing causes an effect to remarkably improve the adhesive property to a substrate and thus have completed the fourth invention.

The fourth invention is a curable resin composition, which contains a curable resin to be cured by light and/or heat, a polymerization initiator and a resin fine particle, the resin fine particle having a core particle made of a resin having rubber elasticity and a glass transition temperature of -10°C or lower and a shell layer made of a resin having a glass transition temperature of 50 to 150°C, being formed on the surface of the core particle, a cured product having a glass transition temperature of 120°C or higher measured by dynamic mechanical analysis (DMA) under conditions of temperature rising rate of 5°C/min and of a frequency of 10 Hz.

Each of the resin fine particles has a core particle made of a resin having rubber elasticity and a glass transition temperature of -10°C or lower and a shell layer made of a resin having a glass transition temperature of 50 to 150°C being formed on the surface of the core particle.

In this description, the glass transition temperature means a value measured by a common DSC method at a heating speed of 10°C/min, without otherwise specified.

The resin having rubber elasticity and a glass transition temperature of -10°C or lower is not particularly limited and polymers of (meth)acrylic monomers are preferable.

Examples of the (meth)acrylic monomers are ethyl acrylate, propyl acrylate, n-butyl acrylate, cyclohexyl acrylate, 2-ethylhexyl acrylate, ethyl methacrylate, and butyl methacrylate. These (meth)acrylic monomers may be polymerized alone or two or more of them may be copolymerized.

The resin having rubber elasticity and a glass transition temperature of 50 to 150°C is not particularly limited and examples of the resin may be polymers obtained by polymerizing isopropyl methacrylate, t-butyl methacrylate, cyclohexyl methacrylate, phenyl methacrylate, methyl methacrylate, styrene, 4-chlorostyrene, 2-ethylstyrene, acrylonitrile, vinyl chloride and the like. These monomers may be used alone or two or more of them may be used in combination.

The particle diameter of the above-mentioned resin fine particles may properly be selected in accordance with the uses of the curable resin composition of the fourth invention and in the case of using the composition for a sealant for a liquid crystal display element, a lower limit is preferably 0.01 μm and an upper limit is preferably 5 μm. If it is within the range, the surface area of the resin fine particles to the curable resin is sufficiently large and an effective core layer swelling effect can be caused and the gap-forming workability between substrates in the case of using the composition for a sealant for a liquid crystal display element can be guaranteed.

A method of producing the resin fine particles is not particularly limited and an example of the method may be a method carried out by forming the core particles by emulsion polymerization method of only monomers composing the core and then further forming the shell layer on the surface of the core particles by adding monomers composing the shell and polymerizing the monomers.

The blending amount of the resin fine particles in the curable resin composition of the fourth invention is preferably in a range from a lower limit of 15 parts by weight to an upper limit of 50 parts by weight to the curable resin composition 100 parts by weight. If it is lower than 15 parts by weight, a sufficient adhesive property improvement effect may not be obtained and if it exceeds 50 parts by weight, the viscosity is sometimes increased unnecessarily. A more preferable upper limit is 20 parts by weight.

The curable resin composition of the fourth invention has a glass transition temperature of 120°C or higher measured by dynamic mechanical analysis (DMA) under conditions of temperature rising rate of the cured product of 5°C/min and of a frequency of 10 Hz. If it is lower than 120°C, even if the resin fine particles are added, the effect of improving the adhesive property to a glass substrate cannot be obtained. The upper limit of the glass transition temperature is not particularly limited, however it is preferably 180°C. If it exceeds 180°C, a sufficient adhesive property cannot be obtained in some cases. A more preferable upper limit is 150°C.
The cure product here means a cured product obtained by curing by light and/or heat.

The curable resin composition of the fourth invention is preferable to have an adhesive strength of 150 $N/cm^2$ or higher in the case of being cured. If it is lower than 150 $N/cm^2$, the strength of the liquid crystal display device to be obtained sometimes becomes insufficient.
The adhesive strength can be measured from the tensile strength required to separate two glass substrates after the two glass substrates are stuck to each other by using the curable resin composition of the invention and the resin composition is cured.

The inventors of the invention have struggled and have made investigations to solve the problem of the cell gap inequality and have found that use of a curable resin composition containing inorganic particles and having a specified average coefficient of linear expansion could prevent the cell gap inequality owing to the misalignment between substrates and thus have completed the fifth invention and the sixth invention.
The fifth invention is a curable resin composition, which contains a curable resin to be cured by light and/or heat, a polymerization initiator and an inorganic particle having an average particle diameter of 1 μm or smaller, the average coefficient of linear expansion $\alpha_1$ being $1\times10^{-4}$ to $5\times10^{-4}$/°C in a range from a temperature lower than a glass transition temperature of the cured product cured only by light by 40°C to a temperature lower than the glass transition temperature by 10°C and an average coefficient of linear expansion $\alpha_2$ being $2\times10^{-4}$ to $1\times10^{-3}$/°C in a range from a temperature higher than the glass transition temperature by 10°C to a temperature higher than the glass transition temperature by 40°C.
The sixth invention is a curable resin composition, which contains a curable resin to be cured by light and/or heat, a polymerization initiator and an inorganic particle having an average particle diameter of 1 μm or smaller, the average coefficient of linear expansion $\alpha_1$ being $5\times10^{-5}$ to $1\times10^{-4}$/°C in a range from a temperature lower than a glass transition temperature of the cured product cured by light and heat by 40°C to a temperature lower than the glass transition temperature by 10°C and an average coefficient of linear expansion $\alpha_2$ being $1\times10^{-4}$ to $3\times10^{-4}$/°C in a range from a temperature higher than the glass transition temperature by 10°C to a temperature higher than the glass transition temperature by 40°C.

The curable resin to be used for the curable resin compositions of the fifth and the sixth inventions is preferable to be those having a cyclic ether group and a radical polymerizable functional group. Accordingly, the curable resin compositions of the fifth and the sixth inventions are provided with both photo-curable and heat-curable properties and in the case of using them for at least one of a sealant, an end-sealant, and/or a transfer material to be used for producing a liquid crystal display device by a one drop fill process, the resin compositions can be temporarily cured by light radiation and then actually cured by heating.

The cyclic ether group of the curable resin to be used in the curable resin compositions of the fifth and the sixth inventions is not particularly limited and preferable examples are an epoxy group and an oxetane group. The radical polymerizable functional group in the reactive resin is not particularly limited and a (meth)acryl group is preferable.

A preferable lower limit of the functional group equivalent of the total of the cyclic ether group and the radical polymerizable functional group in the curable resin to be used in the curable resin composition of the fifth and the sixth inventions is 2.5 mmol/g and a preferable upper limit of that is 5.5 mmol/g. If it is lower than 2.5 mmol/g, the resin compositions may possibly be inferior in heat resistance and the moisture resistance and if it exceeds 5.5 mmol/g, the adhesion property to a substrate may become insufficient.

A preferable lower limit of the functional group equivalent of the radical polymerizable functional group in the curable resin to be used in the curable resin composition of the fifth and the sixth inventions is 2.0 mmol/g and a preferable upper limit of that is 5.0 mmol/g. If it is lower than 2.0 mmol/g, the resin compositions may possibly be inferior in heat resistance and the moisture resistance and if it exceeds 5.0 mmol/g, the adhesion property to a substrate may become insufficient.

A preferable lower limit of the value calculated by dividing the equivalent of the radical polymerizable functional group in the curable resin to be used in the curable resin composition of the fifth and the sixth inventions by the equivalent of the cyclic ether group is 1 and a preferable upper limit of that is 9. If it is lower than 1, the photo-reactivity is deteriorated, so that not only the initial temporal curing cannot be carried out even by radiating light to the sealant after adjustment of gaps but also the elution to a liquid crystal sometime becomes significant and if it exceeds 9, the resin compositions sometimes become insufficient in adhesive property and the moisture permeability.

The curable resin to be used in the curable resin compositions of the fifth and the sixth inventions is preferable to have a hydroxyl group and/or an urethane bond in terms of decrease of the compatibility with a liquid crystal and prevention of the contamination and also preferable to have a molecular skeleton selected from the group consisting of a biphenyl skeleton, a naphthalene skeleton, a bisphenol skeleton, and a partially (meth)acrylated products of a novolak type epoxy resin.

The curable resin to be used in the curable resin compositions of the fifth and the sixth inventions is preferable to further have a cyclic structure having the number of atoms of 24 or less. Here, the number of atoms means the total number of atoms composing the cyclic structure such as carbon, hydrogen, and oxygen in the molecule. If the number of atoms exceeds 24, the coefficient of linear expansion, which will be described later, cannot be satisfied or the heat resistance may possibly be deteriorated.

A preferable lower limit of the equivalent of the cyclic structure of the curable resin to be used in the curable resin composition of the fifth and the sixth inventions is 1.5 mmol/g and a preferable upper limit of that is 6.0 mmol/g. If it is lower than 1.5 mmol/g, the coefficient of linear expansion, which will be described later, cannot be satisfied or the heat resistance may possibly be deteriorated and if it exceeds 6.0 mmol/g, the adhesion property to a substrate and the like may become insufficient.

The atoms composing the above-mentioned cyclic structure are not particularly limited, however the skeleton structure is preferable to be composed of carbon atoms and the cyclic structure is preferable to be aromatic.
The aromatic cyclic structure is not particularly limited and examples are benzene, indene, naphthalene, tetralin, anthracene, and phenanthrene.

The number average molecular weight of the curable resin to be used in the curable resin composition of the fifth and the sixth inventions is preferably in a range from a lower limit of 300 to an upper limit of 550. If it is lower than 300, the elution to a liquid crystal takes place and alignment of the liquid crystal may possibly be disordered and if it exceeds 550, the viscosity is increased and therefore, it sometime becomes difficult to produce a sealant, an end-sealant, or a transfer material.

The inorganic particles have a function of preventing the curing shrinkage of the curable resin compositions of the fifth and the sixth inventions and giving the following coefficient of linear expansion.
The inorganic particles are not particularly limited and examples are silica, diatomaceous earth, alumina, zinc oxide, iron oxide, magnesium oxide, tin oxide, titanium oxide, magnesium hydroxide, aluminum hydroxide, magnesium carbonate, barium sulfate, gypsum, calcium silicate, talc, glass beads, sericite, activated kaolin, bentonite, aluminum nitride, silicon nitride, smectite, montmorillonite, allophane, potassium titanate, zeolite, sepiolite, calcium carbonate, calcia, magnesia, ferrite, hematite, and aluminum borate. Among them, silica and alumina are preferable.
The shape of the inorganic particles is not particularly limited and specified shapes such as a spherical, needle-like or platy shape or amorphous state can be exemplified.

The inorganic particles may be surface-treated with at least one compounds selected from the group consisting of imidazole-silane compounds having a structure of bonding an imidazole skeleton and an alkoxysilyl group via a spacer group, epoxysilane compounds, and aminosilane compounds. Such surface treatment increases the affinity of the inorganic particles with the above-mentioned reactive resins and they work as a silane coupling agent to improve the adhesive strength and the storage stability.

The upper limit of the average particle diameter of the inorganic particles is 1 $\mu$m. If it exceeds 1 $\mu$m, the surface of the cured product obtained by curing the photo-and heat-curable resin composition by light and/or heat becomes irregular to decrease the precision of the cell gap. The lower limit is preferably 0.01 $\mu$m and the upper limit is preferably 0.1 $\mu$m. If it is smaller than 0.01 $\mu$m, the thixotropic property is increased and the agglomerated products may be produced in some cases.

The content of the inorganic particles in the curable resin compositions of the fifth and the sixth inventions is preferably in a range from a lower limit of 10 parts by weight to an upper limit of 50 parts by weight to the curable resin 100 parts by weight. The lower limit is more preferably 15 parts by weight and the upper limit is more preferably 35 parts by weight.

The curable resin composition of the fifth invention has the average coefficient of linear expansion $\alpha_1$ being $1\times10^{-4}$ to $5\times10^{-4}$/°C in a range from a temperature lower than a glass transition temperature of the cured product cured only by light by 40°C to a temperature lower than the glass transition temperature by 10°C and an average coefficient of linear expansion $\alpha_2$ being $2\times10^{-4}$ to $1\times10^{-3}$/°C in a range from a temperature higher than the glass transition temperature by 10°C to a temperature higher than the glass transition temperature by 40°C. If the average coefficient of

linear expansion $\alpha_1$ is less than $1\times10^{-4}$/°C or the average coefficient of linear expansion $\alpha_2$ is less than $2\times10^{-4}$/°C, in the case of using the resin composition for a sealant, an end-sealant, and a transfer material for the producion of the liquid crystal display device by the one drop fill process, the adhesion property to a substrate becomes insufficient even if temporal curing by light radiation and actual curing by heating are carried out and therefore, a sufficient adhesive property cannot be obtained. If the average coefficient of linear expansion $\alpha_1$ exceeds $5\times10^{-4}$/°C or the average coefficient of linear expansion $\alpha_2$ exceeds $1\times10^{-3}$/°C, the substrate may be shifted and the cell gap inequality may occur at the time of temporal curing.

The curable resin composition of the sixth invention has the average coefficient of linear expansion $\alpha_1$ being $5\times10^{-5}$ to $1\times10^{-4}$/°C in a range from a temperature lower than a glass transition temperature of the cured product cured by light and heat by 40°C to a temperature lower than the glass transition temperature by 10°C and an average coefficient of linear expansion $\alpha_2$ being $1\times10^{-4}$ to $3\times10^{-4}$/°C in a range from a temperature higher than the glass transition temperature by 10°C to a temperature higher than the glass transition temperature by 40°C. If the average coefficient of linear expansion $\alpha_1$ is less than $5\times10^{-5}$/°C or the average coefficient of linear expansion $\alpha_2$ is less than $1\times10^{-4}$/°C, in the case of using the resin composition for a sealant, an end-sealant, and a transfer material for the producion of the liquid crystal display device by the one drop fill process, the adhesion property to a substrate becomes insufficient even if temporal curing by light radiation and actual curing by heating are carried out and therefore, a sufficient adhesive property cannot be obtained. If the average coefficient of linear expansion $\alpha_1$ exceeds $1\times10^{-4}$/°C or the average coefficient of linear expansion $\alpha_2$ exceeds $3\times10^{-4}$/°C, the heat resistance and the cooling and heating cycle property of the liquid crystal display device to be obtained may be deteriorated.

The curable resins of the first to the third inventions are capable of mainly solving the problem of the liquid crystal contamination; the curable resin of the fourth invention is capable of mainly solving the problem of the adhesive property; and the curable resin compositions of the fifth and the sixth inventions are capable of mainly solving the problem of the cell gap. They may be carried out independently, however if they are employed in combination to an extent that the respective purposes are not interfered, they can be used preferably for a sealant for liquid crystal display element to be used for producing a liquid crystal display element by the one drop fill process.

The curable resin compositions of the first to the sixth inventions may further contain a curing agent. The curing agent is not particularly limited and examples are amine compounds, polyhydric phenol compounds, and acid anhydrides. The above-mentioned amine compounds are compounds having one or more primary to tertiary amino groups in one molecule and examples of such amine compounds are aromatic amines such as meta-phenylenediamine and diaminodiphneylmethane; imidazole compounds such as 2-methylimidazole, 1,2-dimethylimidazole, and 1-cyanoethyl-2-methylimidazole; imidazoline compounds such as 2-methylimidazoline; dihydrazide compounds such as sebacic acid dihydrazide and isophthalic acid dihydrazide; and dicyandiamide. Also usable are amine adducts such as Amicure PN-23 and Amicure MY-24 commercialized by Ajinomoto Fine Techno. Co., Inc.

Examples of the polyhydric phenol compounds are polyphenol compounds such as Epicure 170 and Epicure YL 6065 commercialized by Japan Epoxy Resin Co., Ltd.; and novolak type phenol resins such as Epicure MP402FPI.

Examples of the acid anhydrides are Epicure YH-306 and YH-307 commercialized by Japan Epoxy Resin Co., Ltd.

These curing agents may be used alone or two or more of them may be used in combination. Among them, solid amine compounds are more preferable since they are excellent in the low temperature curing property and the pot life in the case they are mixed with curable resins. Among the above-mentioned solid amine compounds, in terms of the storage stability of the curable compositions, those having a melting point of 100°C or higher are more preferable.

A preferable content of the curing agents in the curable resin compositions of the first to the sixth inventions is in a range from a lower limit of 0.1 parts by weight to an upper limit of 100 parts by weight, respectively to the curable resin 100 parts by weight. If it is less than 0.1 parts by weight, the curing may be insufficient and if it exceeds 100 parts by weight, the storage stability of the curable resin compositions may possibly be deteriorated. A more preferable lower limit is 1 part by weight and a more preferable upper limit is 50 parts by weight.

The curable resin compositions of the first to the sixth inventions may contain a thixotropic agent adjusting thixotropy, a gap adjustment agent, a defoaming agent, a leveling agent, a polymerization inhibitor, a filling agent such as a filler based on the necessity.

A method of producing the curable resin compositions of the first to the sixth inventions is not particularly limited and methods by mixing the above-mentioned curable resins, the polymerization initiators, and various kinds of additives to be added based on the necessity by conventionally known mixing methods can be exemplified. In this case, the mixtures may be brought into contact with an ion-adsorbing solid such as layer silicate mineral for removing ionic impurities.

In the case of producing the curable resin compositions of the first to the sixth inventions, after the components composing the curable resin compositions are mixed, the mixtures are preferable to be filtered by a filter.

Generally, since affinity of the curable resins with the curing agents and fillers is not necessarily high, the curing agents or the fillers are not sufficiently dispersed in the resins only by simply mixing the respective components by conventional methods and a portion of them are agglomerated and form agglomerates. Even if such agglomerates are formed, in the

case of producing a sealant for a liquid crystal display element by a conventional method, the cell gap can be adjusted by hot press step and therefore, it scarcely causes any effect. However, in the case of producing the liquid crystal display element by the one drop fill process, since there is no cell gap adjustment step by hot press, it is supposed that if agglomerates with a large particle size exist in a sealant for a liquid crystal display element, the agglomerates affect even the cell gap of the liquid crystal display element to be obtained.

Filtration by a filter after the components composing the curable resin compositions are mixed can reliably remove the agglomerates with a relatively large particle size affecting the cell gap, so that the defective cell gap attributed to the agglomerates can be avoided.

The method of producing a curable resin composition which comprises a step of filtering using a filter after mixing a component composing the curable resin composition is one of inventions.

The filter is not particularly limited if it can remove the agglomerates with a particle size to affect the cell gap of an aimed liquid crystal display element. It is preferable for the filter to remove the agglomerates having a particle size two or more times as large as the cell gaps of an aimed liquid crystal display element and it is more preferable for the filter to remove the agglomerates having a particle size equal to or larger than the cell gaps of an aimed liquid crystal display element. However, in the case of a liquid crystal display element with a structure in which a part formed in a transparent substrate such as a circuit is laid over only in a part or all of the seal part, the width of the seal part becomes narrower than the actual cell gap by the size of the part, it is more preferable to remove the agglomerates having a particle size equal to or larger than the narrowed width of the seal part.

Examples of such a filter are those having capture efficiency of 70% or higher of the particles having a particle diameter equal to or larger than the distance (cell gap) between the substrates of the aimed liquid crystal display element and those having air flow resistance of 10 mm $H_2O$ or higher in the case air is passed at pressure of at 4.6 $N/cm^2$ and at a flow rate of 2 L/min.

Since the curable resin compositions have a high viscosity, it is preferable to pressurize the curable resin compositions at the time of filtration. Accordingly, the filter to be used is preferable to stand the pressure application. As such a filter, those made of metals such as a stainless steel and ceramics are preferable.

In the above-mentioned filtration step, at the time of filtration, the temperature is more preferable to be lower to suppress the curing reaction and to improve the filtration efficiency even a little by lowering the viscosity of the curable resin compositions, it is preferable to heat the curable resin compositions to an extent that curing does not caused. A preferable lower limit of the temperature of the curable resin compositions at the time of filtration is 25°C and a preferable upper limit of that is 70°C. If it is out of the range, not only the filtration efficiency is deteriorated but also the heating time taken for the filtration is prolonged and therefore, the viscosity of the filtrates may possibly increases or during the storage or the use, the degree of the increase of the viscosity of a sealant may become significantly high. A more preferable lower limit is 30°C and a more preferabe upper limit is 60°C.

The composing components of the curable resin compositions are preferable to be selected from those which can suppress the increase of the viscosity of the curable resin composition around a normal temperature.

Prior to the step of filtration using the filter, it is preferable to sufficiently mix the components composing the curable resin compositions. If the mixing is insufficient, the amount of the components to be removed by the filter increases, so that a sealant for a liquid crystal display element having properties as desired cannot be obtained in some cases.

The method of mixing is not particularly limited and conventionally employed methods using a planetary mixing apparatus and three rolls can be exemplified.

The curable resin compositions of the invention are preferable to have a content of the particles with a particle diameter equal to larger than the gap between the substrates of an aimed liquid crystal display element of 30% by weight or lower.

The curable resin compositions of the first to the sixth inventions scarcely cause liquid crystal contamination, are excellent in the adhesive property to a substrate, and cause no cell gap inequality in the case of being used as a sealant for a liquid crystal display element for producing a liquid crystal display element by a one drop fill process.

A sealant for a liquid crystal display element comprising the curable resin compositions of the invention is also one of the inventions.

An end-sealant for a liquid crystal display element comprising the curable resin compositions of the invention is also one of the inventions.

In a liquid crystal display element, generally a transfer material is used for transferring between mutually opposed electrodes on two transparent substrates. The transfer material is generally obtainable by adding conductive fine particles to a curable resin composition.

The transfer material for a liquid crystal display element comprising the curable resin compositions of the invention and the conductive fine particles is also one of the inventions.

The conductive fine particles are not particularly limited and may include metal fine particles; resin based fine particles coated with metals (hereinafter, referred to as metal-coated fine particles); resin based fine particles coated with metals and further coated with a resin (hereinafter, referred to as coated metal-coated fine particles); and these

metal fine particles, metal-coated fine particles, and coated metal-coated fine particles having projections in the surface, and the like. Among them, metal-coated fine particles and coated metal-coated fine particles subjected to gold coating or copper coating are preferable since they are excellent in uniform dispersibility in resin compositions and conductivity.

The blending amount of above-mentioned conductive fine particles is in a range preferable from a lower limit of 0.2 parts by weight and an upper limit of 5 parts by weight to the above-mentioned curable resin composition 100 parts by weight.

A method of producing the transfer material for a liquid crystal display element of the invention is not particularly limited and for example, a method of mixing the above-mentioned curable resin composition, the conductive fine particles and the like in prescribed blending amounts and mixing the mixture by a vacuum planetary stirring apparatus can be exemplified.

A method of producing a liquid crystal display element using at least one of the sealant for a liquid crystal display element, the end-sealant for a liquid crystal display element, and the transfer material for a liquid crystal display element of the invention is not particularly limited, and the following methods can be employed to produce a liquid crystal display element.

A rectangular seal pattern is formed by applying the sealant for a liquid crystal display element of the invention by a screen printing, dispenser application and the like to one of two transparent substrates having electrodes such as ITO thin films. Further, a pattern for transfer is formed on a prescribed electrode of the other transparent electrodes by applying a transfer material for a liquid crystal display element of the invention by dispenser application and the like. In this connection, it is possible to form a transfer by adding conductive fine particles to the sealant in place of the transfer material. Next, in the state the sealant is not yet cured, small droplets of a liquid crystal are dropped and applied to the entire face of one transparent substrate within a frame and immediately the other transparent substrate is laid over in the state that the transfer material is not yet cured and ultraviolet rays are radiated to the seal part and the transfer material to cure them. In the case sealant for a liquid crystal display element of the invention and the transfer material for a liquid crystal display element of the invention have heat-curable property, the curing is completed by heat curing at 100 to 200°C for 1 hour in an oven to produce a liquid crystal display element.

A liquid crystal display element obtainable by using one of the sealant for a liquid crystal display element of the invention, the end-sealant for a liquid crystal display element of the invention, and the transfer material for a liquid crystal display element is also one of the inventions.

The inventors of the invention have made investigation on a liquid crystal display element produced by the one drop fill process and have found that in the case a sealant and an alignment film are brought into contact with each other, the liquid crystal material contamination and a defective display image tend to be caused easily. Accordingly, with respect to a liquid crystal display element, the display defect can efficiently be prevented by forming the structure of the liquid crystal display element in which the alignment film and the sealant are not brought into contact with each other.

A liquid crystal display element, wherein a pair of transparent substrates with an alignment layer formed respectively at least partially in one face are placed opposite to set the faces with the alignment layer formed respectively on the opposite to each other in a certain gap via a sealant formed to surround a peripheral part of the outer circumference, and a liquid crystal material is enclosed in a space formed by the transparent substrates and the sealant, and the alignment layer and the sealant are not brought into contact with each other, also constitutes one of the inventions.

Fig. 1 shows a partially magnified cross-sectional view schematically showing one example of a liquid crystal display element of the invention and Fig. 2 shows a horizontal cross-sectional view showing one example of a liquid crystal display element of the invention.

As shown in Fig. 1, the liquid crystal display element 10 of the invention has a structure in which the two transparent substrates 11 each having the alignment film 13 on the surface are stuck to each other via the sealant 12 in a manner that the alignment films 13 are on the opposite to each other.

Further, although it is not shown in the figure, a transparent electrode made of a tin-doped indium oxide film (ITO film) and the like is formed between the transparent substrate 11 and the alignment film 13.

Such a transparent electrode can be formed on the surface of the above-mentioned transparent substrate by conventionally known vacuum deposition method, sputtering method, pyrosol method, dipping method, and the like.

As shown in Fig. 2, in the liquid crystal display element 10 of the invention, the sealant 12 is formed so as to surround the peripheral part of the outer circumference of the transparent substrate 11 and the alignment film 13 is formed on the surface of the transparent substrate 11 and in a region surrounded with the sealant 12 without being brought into contact with the sealant 12.

In the liquid crystal display element 10 of the invention, it is sufficient if the sealant 12 and the alignment film 13 are not brought into contact with a contact with each other and they are preferable to be at a distance of 5 μm or more from each other. If the distance is less than 5 μm, the defective display cannot be prevented in some cases.

The liquid crystal display element of the invention is not limited to those having the structures shown in Fig. 1 and Fig. 2 and may have a structure in which conventionally known all kinds of required parts such as a spacer, a TFT element, and a color filter are installed.

The transparent substrates composing the liquid crystal display element of the invention are not particularly limited and those which have conventionally been known and employed for a liquid crystal display element such as glass and resins can be exemplified. The size and the thickness of the transparent substrates are not particularly limited and properly determined in accordance with the size of an aimed liquid crystal display element.

The alignment film is not particularly limited and those which have been used conventionally for a liquid crystal display element can be used and generally polyimides are used since they are excellent in the heat resistance, chemical resistance, and adhesive property to the transparent substrates.

The liquid crystal display element of the invention having such a structure can be produced by the following method.

At first, rectangular alignment films of a polyimide and the like are formed in prescribed portions of one face of both two transparent glass substrates having electrodes such as ITO thin films by flexographic printing, gravure printing, ink-jet printing, screen printing, or a spin coater. In this case, the alignment films are not formed in the portions where the sealant is to be applied.

Next, after the alignment films are subjected to alignment treatment by rubbing treatment and the like, the sealant is applied to the portion in the peripheral parts of the outer circumference of the transparent substrates where the sealant does not contact with the alignment films by screen printing, dispenser printing, and the like to form seal patterns with a shape surrounding the alignment films.

Next, in the state the sealant is not yet cured, small droplets of a liquid crystal are dropped and applied to the entire face within a frame of one transparent substrate surrounded by the sealant and immediately the other transparent substrate is laid over and ultraviolet rays are radiated to the seal part to cure the sealant. In the case the sealant has a heat-curing property, the curing is completed by heat curing at 80 to 200°C for 0.5 to 2 hours in an oven and thus the liquid crystal display element of the invention can be produced.

With respect to the liquid crystal display element of the invention, since the alignment films formed on transparent substrates and the sealant are not brought into contact with each other, the liquid crystal in the peripheral part of the circumference where the sealant is formed and where the liquid crystal contamination is most easily caused is scarcely contaminated and accordingly, display images with high quality can be obtained.

EFFECT OF THE INVENTION

The invention is capable of providing a curable resin composition which causes no liquid crystal contamination, which are excellent in the adhesive property to a substrate, and which causes no cell gap inequality in the case it is used as a sealant for a liquid crystal display element to produce a liquid crystal display element by a one drop fill process, a sealant for a liquid crystal display element, and a liquid crystal display element.

BEST MODE FOR CARRYING OUT THE INVENTION

Hereinafter, the aspect of the present invention will be described in more detail by way of Examples, but the present invention is not limited to these Examples.

(Example 1)

A non-crystalline (meth)acrylic acid-modified epoxy resin (50% partially acrylated compound) was obtained by refluxing and stirring the mixture of a crystalline epoxy resin represented by the following general formula (10) (YSLV-80XY, melting point 78°C, manufactured by Nippon steel Chemical Co., Ltd.) 1000 parts by weight, p-methoxyphenol as a polymerization inhibitor 2 parts by weight, triethylamine as a reaction catalyst 2 parts by weight, and acrylic acid 200 parts by weight while air was blown and carrying out reaction at 90°C for 5 hours.

[Chem. 4]

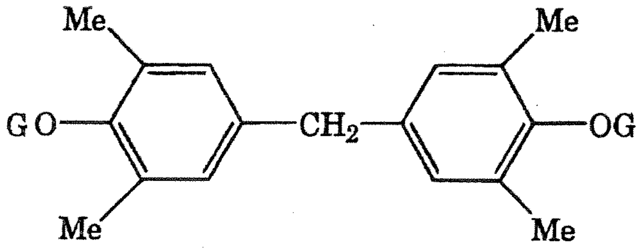

(10)

in the formula, G represents a glycidyl group.

Trimethylolpropane 134 parts by weight, BHT as a polymerization initiator 0.2 parts by weight, dibutyltin dilaurate as a reaction catalyst 0.01 parts by weight, isophorone diisocyanate 666 parts by weight were added and refluxed and stirred at 60°C for carrying out reaction for 2 hours. Next, 2-hydroxyethylacrylate 25.5 parts by weight and glycidol 111 parts by weight were added and refluxed and stirred at 90°C while air was blown for carrying out reaction for 2 hours. The obtained resin 100 parts by weight was filtered through a column filled with a natural bonded material of quartz and kaolin (Silicin V85, manufactured by Hoffman Mineral Co.) 10 parts by weight for ionic impurity adsorption to obtain an urethane-modified partially acrylated compound.

The obtained (meth)acrylic acid-modified epoxy resin 40 parts by weight, urethane-modified partially acrylated compound 20 parts by weight, a hydrazide type curing agent as a latent heat curing agent (Amicure VDH manufactured by Ajinomoto Fine Techno Co., Inc.) 15 parts by weight, 2,2-diethoxyacetophenone as a photopolymerization initiator 1 part by weight, silica particles (average particle diameter 1.5 μm) 23 parts by weight, γ-glycidoxypropyltrimethoxysilane 1 part by weight were sufficiently mixed by three rolls until the mixture became a uniform liquid to obtain a curable resin composition.

A liquid crystal display device was produced using the obtained curable resin composition as a sealant for a liquid crystal display element.

That is, the sealant was applied to one of two transparent substrates having transparent electrodes by a dispenser in a manner of drawing a rectangular frame with the sealant. Successively, small droplets of a liquid crystal (JC-5004 LA, manufactured by Chisso Corporation) were dropped and applied to the entire face within the frame of the transparent substrate and immediately the other transparent substrate was laid over and ultraviolet rays of 100 $mW/cm^2$ dose were radiated to the seal part for 30 seconds by a high pressure mercury lamp. After that, liquid crystal annealing was carried out at 120°C for 1 hour to carry out heat-curing and a liquid crystal display device was obtained.

(Example 2)

A crystalline (meth)acrylic acid-modified epoxy resin (50% partially acrylated compound) was obtained by refluxing and stirring the mixture of a crystalline epoxy resin represented by the following general formula (11) (YSLV-80DE, melting point 79°C, manufactured by Nippon steel Chemical Co., Ltd.) 1000 parts by weight, p-methoxyphenol as a polymerization inhibitor 2 parts by weight, triethylamine as a reaction catalyst 2 parts by weight, and acrylic acid 200 parts by weight while air was blown and carrying out reaction at 90°C for 5 hours.

A curable resin composition was produced by the same method as Example 1, except that crystalline (meth)acrylic acid-modified epoxy resin (50% partially acrylated compound) was used in place of the non-crystalline (meth)acrylic acid-modified epoxy resin (50% partially acrylated compound) and a liquid crystal display device was produced by using the curable resin composition as a sealant.

[Chem. 5]

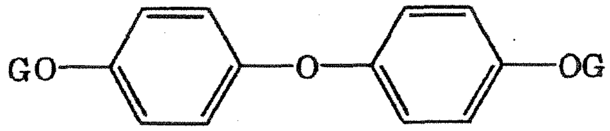

(11)

in the formula, G represents a glycidyl group.

(Comparative Example 1)

A photo-curable sealant was obtained by mixing a curable resin composition comprising urethane acrylate represented by the following general formula (12) (AH-600, manufactured by Kyoeisha Chemical Co., Ltd.) 35 parts by weight, 2-hydroxybutyl acrylate 15 parts by weight, isobornyl acrylate 50 parts by weight, and benzophenone 3 parts by weight until the resin composition became a uniform liquid and using this, a liquid crystal display device was produced.

[Chem. 6]

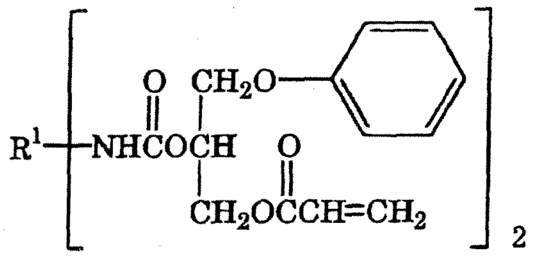

(12)

in the formula, $R^1$ represents an alkyl chain having 5 carbon atoms.

(Comparative Example 2)

A sealant was obtained by mixing a curable resin composition comprising bisphenol A epoxy resin represented by the following general formula (13) (Epikote 828 US, manufactured by Japan Epoxy Resin Co.) 50 parts by weight and a hydrazide type curing agent (NDH, manufactured by Japan Hydrazine Co., Inc.) 25 parts by weight until the resin composition became a uniform liquid and using this, a liquid crystal display device was produced.

[Chem. 7]

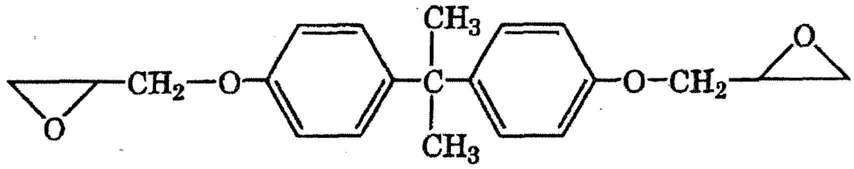

(13)

With respect to the liquid crystal display devices produced in Examples 1 and 2 and Comparative Examples 1 and 2,

the color inequality caused in the liquid crystal in the peripheral parts of the seal parts before and after the apparatuses were kept at 60°C and 95% RH for 500 hours was observed by eye observation to evaluate the liquid crystal contamination according to the four grades: ◎: No color inequality is observed; ○: Color inequality is scarcely observed; △: Color inequality is slightly observed; and ×: Color inequality is rather observed. Evaluation was done using five samples for each. The results are shown in Table 1.

[Table 1]

| | Color inequality evaluation |
|---|---|
| Example 1 | ○ |
| Example2 | ◎ |
| Comparative Example 1 | × |
| Comparative Example2 | × |

(Example 3)

After the curable resin composition obtained in the same manner as Example 1 was sufficiently mixed by three rolls so as to become a uniform liquid, metal-coated fine particles coated with gold (Micropearl AU-206, manufactured by Sekisui Chem. Co., Ltd.) as conductive fine particles 2 parts by weight was added and the mixture was mixed by a vacuum planetary stirring apparatus to produce a transfer material for a liquid crystal display element.

A liquid crystal display device was produced in the same manner as Example 1, except that the obtained transfer material was applied to the transparent substrates by dispenser application to form patterns for transfer on the electrodes for transfer.

Even after the obtained liquid crystal display device was left in conditions of 60°C and 95% RH for 500 hours, the transfer property was excellent.

(Example 4)

(1) Production of radical polymerization initiator

To a reaction flask, 1-[4-(2-hydroxyethoxy)-phenyl]-2-hydroxy-2-methyl-1-propan-1-one (manufactured by Ciba Specialty Chemicals Inc.) 50 mole was added and heated and melted in dry air atmosphere. Dibutyltin dilaurate 0.05 mole and 2-methacryloxyethylene isocyanate (manufactured by Showa Denko K.K.) 100 mole were slowly dropped to the flask and on completion of dropping, reaction was carried out at 90°C until the isocyanate group was found disappeared by infrared absorption spectrometry and after that, refining was carried out to obtain a radical polymerization initiator A represented by the following general formula (14) .

[Chem. 8]

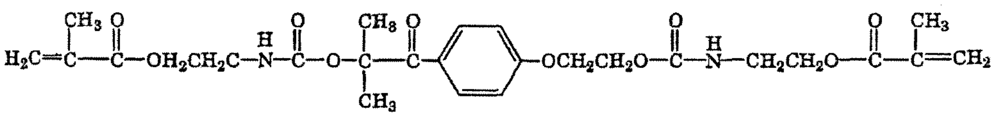
(14)

(2) Production of curable resin composition

The obtained radical polymerization initiator A 3 parts by weight; as a curable resins, partially acrylated epoxy resin (UVAC 1561, manufactured by Daicel UCB Co., Ltd.) 40 parts by weight and acrylate-modified epoxy resin (EB 3700, manufactured by Daicel UCB Co., Ltd.) 20 parts by weight; as a filler, spherical silica (SO-C1, manufactured by Admatechs Co., Ltd.) 15 parts by weight; as an epoxy heat-curing agent, Fujicure FXR-1030 (manufactured by Fuji

Kasei Kogyo Co., Ltd.) 15 parts by weight; as a coupling agent γ-glycidoxypropyltrimethoxysilane 1 part by weight were sufficiently mixed by a paint control until the mixture became a uniform liquid to obtain a curable resin composition.

(3) Production of liquid crystal display element

Spacer fine particles (Micropearl SP-2055, manufactured by Sekisui Chem. Co., Ltd.) 1 part by weight was dispersed in the obtained curable resin composition 100 parts by weight and using the mixture as a sealant for a liquid crystal display element, the sealant was applied to one of two glass substrates previously rubbed and having alignment films and transparent electrodes by a dispenser.
Successively, small droplets of a liquid crystal (JC-5004 LA, manufactured by Chisso Corporation) were dropped and applied to the entire face within the frame of the glass substrate having the transparent electrode and immediately the other glass substrate having the transparent electrode was laid over and ultraviolet rays of 100 $mW/cm^2$ dose were radiated to the sealant part for 30 seconds by a high pressure mercury lamp. After that, heating was carried out at 120°C for 1 hour to carry out heat-curing and a liquid crystal display element was obtained.

(Example 5)

To a reaction flask, 1-[4-(2-hydroxyethoxy)-phenyl]-2-hydroxy-2-methyl-1-propan-1-one 50 mole was added and heated and melted in dry air atmosphere.
Dibutyltin dilaurate 0.05 mole and 2-methacryloxyethylene isocyanate 50 mole were slowly dropped to the flask while the reaction temperature was kept not exceeding 90°C and on completion of dropping, reaction was carried out at 90°C until the isocyanate group was found disappeared by infrared absorption spectrometry and after that, refining was carried out to obtain an intermediate a represented by the following general formula (15).
[Chem. 9]

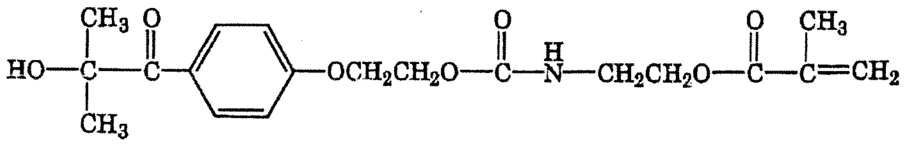

(15)

The obtained intermediate a 50 mole was added to a reaction flask and heated and melted in dry air atmosphere.
Dibutyltin dilaurate 0.05 mole and 2,2,4- and 2,4,4-trimethylhexamethylene diisocyanate (TMHDI, manufactured by Degussa) 50 mole were slowly dropped to the flask while the reaction temperature was kept not exceeding 90°C and reaction was carried out at 90°C until the isocyanate group was found disappeared by infrared absorption spectrometry and after that, refining was carried out to obtain a radical polymerization initiator B represented by the following general formula (16).
[Chem. 10]

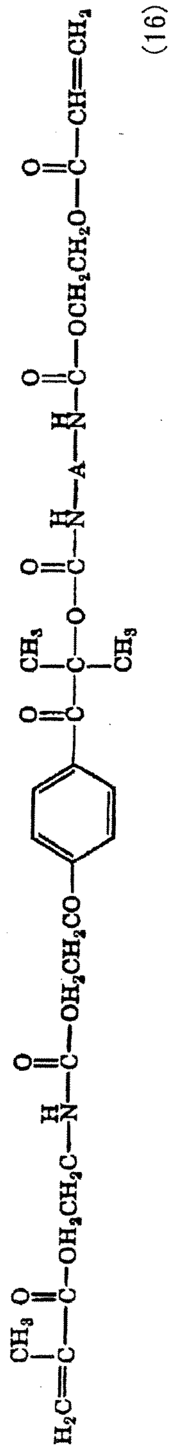

(16)

in the general formula (16), A represents 2,2,4- and 2,4,4-trimethylhexamethylene group.

A curable resin composition was produced by the same method as Example 4, except that the radical polymerization initiator B was used in place of the radical polymerization initiator A and a liquid crystal display element was produced.

(Example 6)

The obtained intermediate a 100 mole was added to a reaction flask and heated and melted in dry air atmosphere. Dibutyltin dilaurate 0.1 mole and 2,2,4- and 2,4,4-trimethylhexamethylene diisocyanate 50 mole were slowly dropped to the flask while the reaction temperature was kept not exceeding 90°C and on completion of the dropping, reaction was carried out at 90°C until the isocyanate group was found disappeared by infrared absorption spectrometry and after that, refining was carried out to obtain a radical polymerization initiator C represented by the following general formula (17).

[Chem. 11]

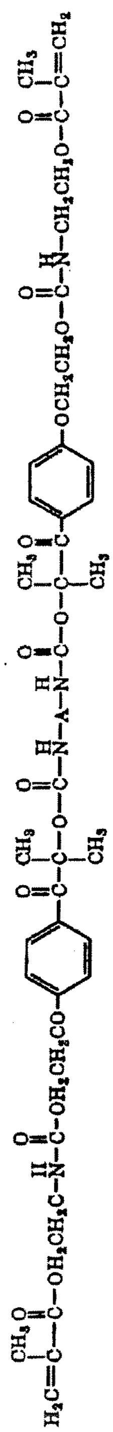

(17)

in the general formula (17), A represents 2,2,4- and 2,4,4-trimethylhexamethylene group.

A curable resin composition was produced by the same method as Example 4, except that the radical polymerization initiator C was used in place of the radical polymerization initiator A and a liquid crystal display element was produced.

(Example 7)

To a reaction flask, 1-[4-(2-hydroxyethoxy)-phenyl]-2-hydroxy-2-methyl-1-propan-1-one 50 mole was added and heated and melted in dry air atmosphere. Dibutyltin dilaurate 0.05 mole and 3-isopropenyl-α,α-dimethylbenzyl

isocyanate 50 mole were slowly dropped to the flask while the reaction temperature was kept not exceeding 90°C and on completion of dropping, reaction was carried out at 90°C until the isocyanate group was found disappeared by infrared absorption spectrometry and after that, refining was carried out to obtain an intermediate b represented by the following general formula (18).

[Chem. 12]

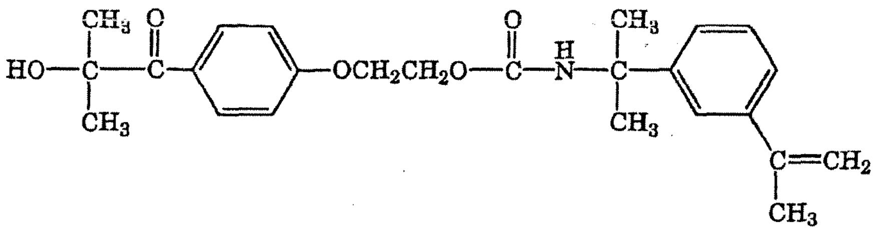

(18)

The obtained intermediate b 50 mole was added to a reaction flask and heated and melted in dry air atmosphere. Dibutyltin dilaurate 0.05 mole and 2,2,4- and 2,4,4-trimethylhexamethylene diisocyanate 50 mole were slowly dropped to the flask while the reaction temperature was kept not exceeding 90°C, and on completion of dropping, glycidole was slowly dropped to the flask while the reaction temperature was kept not exceeding 90°C, and reaction was carried out at 90°C until the isocyanate group was found disappeared by infrared absorption spectrometry and after that, refining was carried out to obtain a radical polymerization initiator D represented by the following general formula (19).

[Chem. 13]

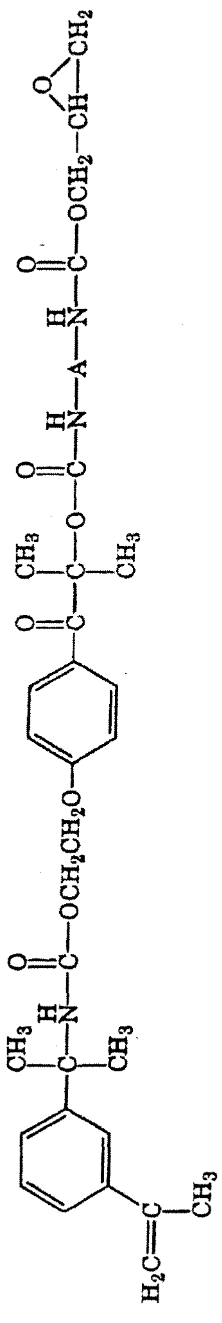

(19)

A curable resin composition was produced by the same method as Example 4, except that the radical polymerization initiator D was used in place of the radical polymerization initiator A and a liquid crystal display element was produced.

(Comparative Example 3)

A curable resin composition was produced by the same method as Example 4, except that Darocure 1173 (manufactured by Ciba Specialty Chemicals Inc.) was used in place of_the radical polymerization initiator A and a liquid crystal display element was produced.

(Comparative Example 4)

A curable resin composition was produced by the same method as Example 4, except that Irgacure 184 (manufactured by Ciba Specialty Chemicals Inc.) was used in place of the radical polymerization initiator A and a liquid crystal display element was produced.

The radical polymerization initiators, the curable resin compositions, and liquid crystal display elements obtained in Examples 4 to 7 and Comparative Examples 3 and 4 were evaluated by the following methods. The results are shown in Table 2.

(Measurement of liquid crystal resistivity retention ratio)

Each curable resin composition 0.5 g was put in an ample bottle (an inner diameter: 10.0 mm) and a liquid crystal 0.5 g was added. The bottle was put in an oven at 120°C for 1 hour and when the bottle was cooled to a room temperature (25°C), the liquid crystal resistivity was measured by a liquid crystal resistivity measurement apparatus (SM-8210 type, manufactured by Toa Denpa Kogyo Co.) using an electrode for a liquid (LE-21 type, manufactured by Ando Denki Co.) in standard temperature and humidity conditions (20°C, 65% RH). The liquid crystal resistivity retention ratio was calculated according to the following formula.

[Math. 3]

liquid crystal resistivity retention ratio (%) = (liquid crystal resistivity retention ratio after addition of sealant / liquid crystal resistivity retention ratio before addition of sealant) × 100.

(Measurement of alteration in nematic-isotropic liquid transition point (N-I point))

Each curable resin composition 0.5 g was put in an ample bottle (an inner diameter: 10.0 mm) and a liquid crystal 0.5 g was added. The bottle was put in an oven at 120°C for 1 hour and when the bottle was cooled to a room temperature (25°C), the liquid crystal part was put in an aluminum pan and heated at temperature rising rate of 10°C/min to measure the peak temperature. MDSC (manufactured by TA Instruments Ltd.) was used as a thermal analysis apparatus. The alteration in nematic-isotropic liquid transition point was calculated according to the following formula.

[Math. 4]

alteration in N-I point (°C) = (N-I point of liquid crystal before addition of sealant) - (N-I point of liquid crystal after addition of sealant).

(Adhesive property evaluation)

Spacer fine particles (Micropearl SP-2055, manufactured by Sekisui Chem. Co., Ltd.) 1 part by weight was dispersed in each curable resin composition 100 parts by weight and the mixture was put on a center part of a slide glass and another slide glass was laid over it and pushed so as to spread the sealant and make its thickness even and then ultraviolet rays of 100 mW/cm$^2$ dose were radiated to the seal part for 30 seconds by a high pressure mercury lamp. After that, heating at 120°C was carried out for 1 hour to obtain each adhesive test specimen. The adhesive strength of each specimen was measured by employing a tension gauge.

(Liquid crystal display panel evaluation (color inequality evaluation))

With respect to obtained liquid crystal display elements, the liquid crystal alignment disorder in the vicinity of the sealant was observed by eye observation immediately after production and after an operation test under conditions

of 65°C and 95% RH for 1000 hours and evaluated according to the following standards: The number of the samples was 6.
◎: No color inequality is observed.
○: Color inequality is scarcely observed.
Δ: Color inequality is slightly observed.
×: Color inequality is rather observed.
[Table 2]

| | Liquid crystal resistivity retention ratio (%) | Alteration in N-I point (°C) | Adhesive property evaluation ($N/cm^2$) | Liquid crystal display panel evaluation |
|---|---|---|---|---|
| Example4 | 80.2 | -2.03 | 470 | ◎ |
| Example5 | 88.3 | -1.81 | 510 | ◎ |
| Example6 | 84.8 | -2.43 | 392 | ◎ |
| Example7 | 76.4 | -2.53 | 451 | ◎ |
| Comparative Example3 | 7.8 | -4.29 | 363 | △ |
| Comparative Example4 | 4.2 | -5.13 | 314 | x |

(Example 8)

A curable resin composition obtained in the same manner as Example 4 was sufficiently mixed by three rolls so as to be a uniform liquid and after that, metal-coated fine particles coated with gold (Micropearl AU-206, manufactured by Sekisui Chem. Co., Ltd.) as conductive fine particles 2 parts by weight was added and the mixture was mixed by a vacuum planetary stirring apparatus to produce a transfer material for a liquid crystal display element.
A liquid crystal display device was produced in the same manner as Example 4, except that the obtained transfer material was applied to the transparent substrates by dispenser application to form patterns for transfer on the electrodes for transfer.
Even after the obtained liquid crystal display device was left in conditions of 60°C and 95% RH for 500 hours, the transfer property was excellent.

(Example 9)

(Synthesis of compound (1))

Phenyl sulfide (10 mol), aluminum chloride (10 mol), and carbon disulfide (2 L) were put in a three-neck flask equipped with a dropping funnel, a mechanical stirrer, and a hydrochloric acid gas trap and stirred at 0°C.
Isobutyryl chloride (10 mol) was slowly dropped to the reaction solution while the reaction temperature was kept not exceeding 10°C and after the dropping was finished, the reaction solution was stirred at a room temperature further for 24 hours. Ice water was added to the reaction solution to stop the reaction and an organic layer was extracted by chloroform and the organic layer was washed with ion-exchanged water and dried by magnesium sulfate anhydride. The solution was concentrated in vacuum and refined to obtain a compound (1) with a structure represented by the following general formula (20).
[Chem. 14]

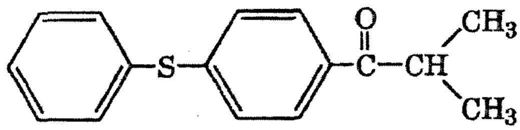

(20)

(Synthesis of compound (2))

The compound (1) (5 mol), aluminum chloride (5 mol), and carbon disulfide (1L) were put in a three-neck flask equipped with a dropping funnel, a mechanical stirrer, and a hydrochloric acid gas trap and stirred at 0°C. Benzoyl chloride (5 mol) was slowly dropped to the reaction solution while the reaction temperature was kept not exceeding 10°C and after the dropping was finished, the reaction solution was stirred at a room temperature further for 24 hours. Ice water was added to the reaction solution to stop the reaction and an organic layer was extracted by chloroform and the organic layer was washed with ion-exchanged water and dried by magnesium sulfate anhydride. The solution was concentrated in vacuum and refined to obtain a compound (2) with a structure represented by the following general formula (21).

[Chem. 15]

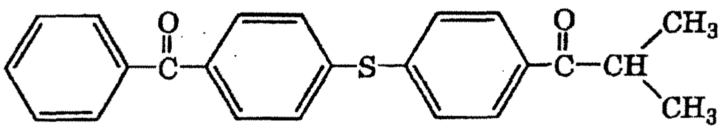

(21)

(Synthesis of radical polymerization initiator A)

The compound (2) (2 mol), dimethyl sulfoxide (2L) were put in a flask in nitrogen atmosphere and a methanol solution of potassium hydroxide (potassium hydroxide: 2 mol/ethanol: 100 mL) was added and stirred at a room temperature. The resulting solution was mixed with p-formaldehyde (2 mol on the basis of aldehyde) and stirred at a room temperature for 5 hours. Hydrochloric acid was added to the solution for neutralization and an organic layer was extracted with ethyl acetate and the organic layer was washed with ion-exchanged water and dried by dehydrated magnesium sulfate. The solution was concentrated in vacuum and refined to obtain a radical polymerization initiator A with a structure represented by the following general formula (22).

[Chem. 16]

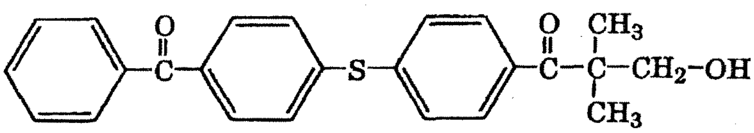

(22)

The obtained radical polymerization initiator A 2 parts by weight, partially acrylated epoxy resin (UVAC 1561,

manufactured by Daicel UCB Co., Ltd.) 40 parts by weight, and bisphenol A epoxy acrylate resin (EB 3700, manufactured by Daicel UCB Co., Ltd.) 20 parts by weight were mixed and heated at 70°C to dissolve the radical polymerization initiator A and then further stirred by a planetary type stirring apparatus to obtain a mixture.
As a filler, spherical silica (SO-C1, manufactured by Admatechs Co., Ltd.) 15 parts by weight, an epoxy heat-curing agent (ADH, manufactured by Otsuka Chemical Co. Ltd.) 5 parts by weight, and a coupling agent (KBM 403, manufactured by Shin-Etsu Chemical Co., Ltd.) 1 part by weight were added to the mixture and sufficiently mixed by a planetary type stirring apparatus and then dispersed by ceramic three rolls to obtain a curable resin composition.
Spacer fine particles (Micropearl SP-2055, manufactured by Sekisui Chem. Co., Ltd.) 1 part by weight was dispersed in the obtained curable resin composition 100 parts by weight and using the mixture as a sealant for a liquid crystal display element, the sealant was applied to one of two glass substrates previously rubbed and having alignment films and transparent electrodes by a dispenser.
Successively, small droplets of a liquid crystal (JC-5004 LA, manufactured by Chisso Corporation) were dropped and applied to the entire face within the frame of the glass substrate having the transparent electrode and immediately the other glass substrate having the transparent electrode was laid over and ultraviolet rays of 50 mW/cm$^2$ dose were radiated to the seal part for 20 seconds by a high pressure mercury lamp equipped with a filter for cutting light with wavelength of 350 nm or shorter to obtain a liquid crystal display element.

(Example 10)

(Synthesis of radical polymerization initiator B)

To a reaction flask, the compound (2) described in Example 9 (1 mol) was added and heated and melted in dry air atmosphere. Dibutyltin dilaurate 0.001 mole and 2-methacryloxyethylene isocyanate (manufactured by Showa Denko K.K.) 1 mole were slowly dropped to the flask and on completion of dropping, reaction was carried out at 90°C until the isocyanate group was found disappeared by infrared absorption spectrometry and after that, refining was carried out to obtain a radical polymerization initiator B represented by the following general formula (23).
[Chem. 17]

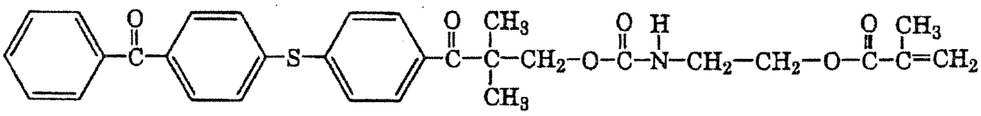
(23)

A curable resin composition was produced by the same method as Example 9, except that the radical polymerization initiator B was used in place of the radical polymerization initiator A.
After that, a liquid crystal display element was produced by the same method as Example 9, using the obtained curable resin composition.

(Example 11)

(Synthesis of radical polymerization initiator C)

To a reaction flask, the compound (2) described in Example 9 (1 mol) was added and heated and melted in dry air atmosphere. Dibutyltin dilaurate (0.001 mol) and 2,2,4-and 2,4,4-trimethylhexamethylene diisocyanate (manufactured by Degussa, 0.5 mol) were slowly dropped to the flask while the reaction temperature was kept not exceeding 90°C and on completion of dropping, 2-hydroxyethyl acrylate (0.5 mol) was slowly dropped while the reaction temperature was kept not exceeding 90°C and reaction was carried out at 90°C until the isocyanate group was found disappeared by infrared absorption spectrometry and after that, refining was carried out to obtain a radical polymerization initiator C represented by the following general formula (24).
[Chem. 18]

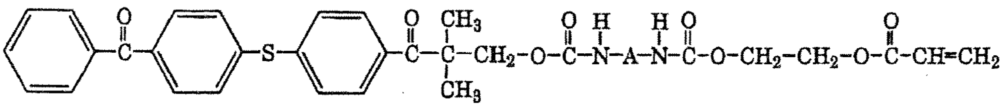

(24)

in the formula (24), A represents 2,2,4- and 2,4,4-trimethylhexamethylene group.

A curable resin composition was produced by the same method as Example 9, except that the radical polymerization initiator C was used in place of the radical polymerization initiator A.
After that, a liquid crystal display element was produced by the same method as Example 9, using the obtained curable resin composition.

(Example 12)

(Synthesis of radical polymerization initiator D)

To a reaction flask, 2-carboxylmethoxythioxanth-9-one (1 mol) was added and heated and melted in dry air atmosphere. Dibutyltin dilaurate 0.001 mol and 2-methacryloxyethylene isocyanate (manufactured by Showa Denko K.K.) 1 mol were slowly dropped to the flask and on completion of dropping, reaction was carried out at 90°C until the isocyanate group was found disappeared by infrared absorption spectrometry and after that, refining was carried out to obtain a radical polymerization initiator D represented by the following general formula (25).
[Chem. 19]

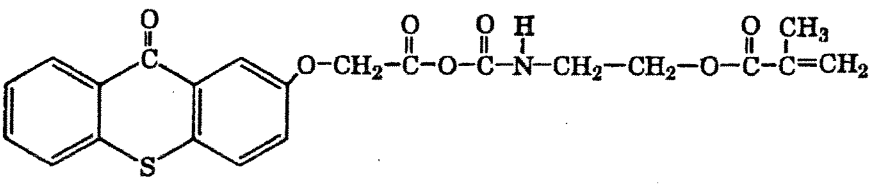

(25)

initiator D was used in place of the radical polymerization initiator A.
After that, a liquid crystal display element was produced by the same method as Example 9, using the obtained curable resin composition.

(Comparative Example 5)

A curable resin composition was produced by the same method as Example 9, except that Irgacure 2959 (manufactured by Nagase and Co., Ltd.) was used in place of the radical polymerization initiator A of Example 9 and a liquid crystal display element was produced.
After that, a liquid crystal display element was produced by the same method as Example 9, using the obtained curable resin composition.

(Comparative Example 6)

A curable resin composition was produced by the same method as Example 9, except that Irgacure 651 (manufactured by Nagase and Co., Ltd.) was used in place of the radical polymerization initiator A of Example 9 and a liquid crystal display element was produced.
After that, a liquid crystal display element was produced by the same method as Example 9, using the obtained curable resin composition.
The radical polymerization initiators, the curable resin compositions, and liquid crystal display elements obtained

in Examples 9 to 12 and Comparative Examples 5 and 6 were evaluated by the following methods. The results are shown in Table 3.

(Measurement of molar absorbance coefficient)

A radical polymerization initiator solution with a sample concentration of $1.0 \times 10^{-4}$ M was prepared using acetonitrile (manufactured by Dojin Chemical Co., Ltd.) for ultraviolet absorption spectrometry and put in a quartz cell with an optical path (1 cm) and the absorbance was measured by a spectrophotometer (UV-2450, manufactured by Shimadzu Corp.). The molar absorbance coefficient was a value calculated by dividing the measured absorbance by the mole concentration (M) of the solution and the thickness (cm) of the cell.

(Measurement of resistivity retention ratio)

Each curable resin composition 0.5 g was put in an ample bottle (an inner diameter: 10.0 mm) and a liquid crystal 0.5 g was added. The bottle was put in an oven at 120°C for 1 hour and when the bottle was cooled to a room temperature (25°C), the resistivity of the liquid crystal part was measured by setting the liquid crystal in a liquid crystal resistivity measurement apparatus (6517A, manufactured by KEITHLEY Instruments, Inc.) using an electrode for a liquid (LE-21 type, manufactured by Ando Denki Co.) in standard temperature and humidity conditions (20°C, 65% RH) and the resistivity retention ratio of the liquid crystal was calculated.

(Measurement of alteration of nematic-isotropic phase transition point (N-I point))

Each curable resin composition 0.5 g was put in an ample bottle (an inner diameter: 10.0 mm) and a liquid crystal 0.5 g was added. The bottle was put in an oven at 120°C for 1 hour and when the bottle was cooled to a room temperature (25°C), the liquid crystal was put in an aluminum pan and heated at temperature rising rate of 10°C/min to measure the peak temperature. The nematic-isotoropic liquid transition point and the alteration in the nematic-isotoropic liquid transition point were measured. MDSC (manufactured by TA Instruments Ltd.) was used as a thermal analysis apparatus.

(Measurement of inversion rate of acryl group)

Spacer fine particles (Micropearl SP-2055, manufactured by Sekisui Chem. Co., Ltd.) 1 part by weight was dispersed in each of the obtained curable resin composition 100 parts by weight and the mixture was put on a center part of a glass (1737, manufactured by Corning Inc.) and another glass (1737, manufactured by Corning Inc.) was laid over it and pushed so as to spread the sealant and make its thickness even to produce a test specimen.
Then ultraviolet rays of 50 mW/cm$^2$ dose were radiated to the produced test specimen for 20 seconds by a high pressure mercury lamp equipped with a filter for cutting light with wavelength of 350 nm or shorter. After that, one of the glass of the test specimen was separated and measurement was carried out by using an infrared spectrophotometer (EXCALIBUR FTS3000MX, BIO RAD Co.). The inversion rate was calculated by comparison using separately measured peak surface area (815 to 800 cm$^{-1}$) of the acryl group before the curing and peak surface area (815 to 800 cm$^{-1}$) of the acryl group after the curing as reference peak surface area (845 to 820 cm$^{-1}$). The inversion rate of acryl group was calculated according to the following formula.
[Math. 5]

Inversion rate of acryl group = [1 - (peak surface area of the acryl group after curing/reference peak surface area after curing) / (peak surface area of the acryl group before curing/reference peak surface area before curing)] ×100.

(Adhesive property evaluation)

Spacer fine particles (Micropearl SP-2055, manufactured by Sekisui Chem. Co., Ltd.) 1 part by weight was

dispersed in each curable resin composition 100 parts by weight and the mixture was put on a center part of a slide glass and another slide glass was laid over it and pushed so as to spread the sealant and make its thickness even and then ultraviolet rays of 50 mW/cm$^2$ dose were radiated for 20 seconds by a high pressure mercury lamp equipped with a filter for cutting light with wavelength of 350 nm or shorter. After that, heating at 120°C was carried out for 1 hour to obtain each adhesive test specimen. The adhesive strength of each specimen was measured by employing a tension gauge.

(Liquid crystal display panel evaluation (color inequality evaluation))

With respect to obtained liquid crystal display elements, the liquid crystal alignment disorder in the vicinity of the sealant was observed by eye observation immediately after production and after an operation test under conditions of 65°C and 95% RH for 1000 hours and evaluated according to the following standards: The number of the samples was 6.
◎: No color inequality is observed.
○: Color inequality is scarcely observed.
Δ: Color inequality is slightly observed.
×: Color inequality is rather observed.

[Table 3]

| | Molar absorbance coefficient ($M^{-1}\cdot cm^{-1}$) | Liquid crystal resistivity retention ratio (%) | Alteration in N-1 point (°C) | Acryl group inversion rate (%) | Adhesive property property evaluation (N/cm$^2$) | Liquid crystal display panel evaluation |
|---|---|---|---|---|---|---|
| Example9 | 1900 | 80 | -1.6 | 95 | 450 | ◎ |
| Example 10 | 1500 | 70 | -1.8 | 95 | 420 | ◎ |
| Example 11 | 1200 | 65 | -1.4 | 95 | 410 | ◎ |
| Example 12 | 1200 | 75 | -1.8 | 90 | 480 | ◎ |
| Comparative Example5 | 50 | 40 | -1.4 | 20 | 400 | × |
| Comparative Example6 | 150 | 5 | -6.5 | 80 | 360 | △ |

(Example 13)

A curable resin composition obtained in the same manner as Example 9 was sufficiently mixed by three rolls so as to be a uniform liquid and after that, metal-coated fine particles coated with gold (Micropearl AU-206, manufactured by Sekisui Chem. Co., Ltd.) as conductive fine particles 2 parts by weight was added to the curable resin composition 100 parts by weight and the mixture was mixed by a vacuum planetary stirring apparatus to produce a transfer material for a liquid crystal display element.

A liquid crystal display device was produced in the same manner as Example 9, except that the obtained transfer material was applied to the transparent substrates by dispenser application to form patterns for transfer on the electrodes for transfer.

The obtained liquid crystal display device was subjected to the liquid crystal display panel evaluation (color inequality evaluation) in the same manner and the liquid crystal alignment disorder in the vicinity of the sealant was observed by eye observation to find that there is no color inequality. The transfer property was also excellent.

(Example 14)

A composition comprising as curable resins, partially acrylated epoxy resin (UVAC 1561, manufactured by Daicel UCB Co., Ltd.) 70 parts by weight and bisphenol F type epoxy resin (Epiclon 830S, manufactured by Dainippon Ink and Chemicals Inc.) 30 parts by weight; as a filler, spherical silica (SO-C1, manufactured by Admatechs Co., Ltd.) 20 parts by weight; as a curing agent, Amicure VDH (manufactured by Ajinomoto Fine Techno Co., Ltd.) 40 parts by weight; and a photoradical polymerization initiator, Irgacure 907 (manufactured by Ciba Specialty Chemicals Inc.) 3 parts by weight was mixed to be a uniform liquid and obtain a curable resin composition solution.

Compoceran E 202 (manufactured by Arakawa Chemical Industries, Ltd., average molecular weight 560) 5 parts by weight was added to the obtained curable resin composition solution 100 parts by weight to produce a curable resin composition.

A liquid crystal display element was produced by using the obtained curable resin composition as a sealant for a liquid crystal display element.

That is, the sealant of a liquid crystal display element was applied to one of two transparent substrates having transparent electrodes by a dispenser in a manner of drawing a rectangular frame with the sealant. Successively, small droplets of a liquid crystal (JC-5004 LA, manufactured by Chisso Corporation) were dropped and applied to the entire face within the frame of the transparent substrate and immediately the other transparent substrate was laid over and ultraviolet rays of 50 $mW/cm^2$ dose were radiated to the seal part for 120 seconds by a high pressure mercury lamp. After that, liquid crystal annealing was carried out at 120°C for 1 hour and the sealant for a liquid crystal display element was heat-cured and thus a liquid crystal display element was obtained.

(Example 15)

An alkoxysilane compound was produced by causing reaction of 3-isocyanatotrimethoxysilane 1 mol and Epiclon EXA-7120 (manufactured by Dainippon Ink and Chemicals Inc.) 1 mol at 70°C for 12 hours in the presence of a tin catalyst. The molecular weight of the alkoxysilane compound was about 655.

The obtained alkoxysilane compound 5 parts by weight was mixed with the curable resin composition solution produced in Example 14 100 parts by weight to produce a curable resin composition.

A liquid crystal display element was produced in the same manner as Example 14, except the obtained curable resin composition was used.

(Example 16)

N-1-phenylethyl-N'-triethoxysilylpropylurea (molecular weight 349.5, hydrogen-bonding functional group value $5.72\times10^{-3}$ mol/g) 5 parts by weight was mixed with the curable resin composition solution produced in Example 14 100 parts by weight to produce a curable resin composition.

A liquid crystal display element was produced in the same manner as Example 14, except the obtained curable resin composition was used.

(Example 17)

An alkoxysilane compound was produced by causing reaction of 3-aminopropyltrimethoxysilane 1 mol and 3-acryloxypropyltrimethoxysilane 1 mol at 70°C for 12 hours. The alkoxysilane compound had a molecular weight of about 413 and a hydrogen-bonding functional group value of $2.42x10^{-3}$ mol/g.

The obtained alkoxysilane compound 5 parts by weight was mixed with the curable resin composition solution produced in Example 14 100 parts by weight to produce a curable resin composition.

A liquid crystal display element was produced in the same manner as Example 14, except the obtained curable resin composition was used.

(Example 18)

An alkoxysilane compound was produced by causing reaction of 3-aminopropyltrimethoxysilane 1 mol and Karenz MOI 1 mol for 12 hours. The alkoxysilane compound had a molecular weight of about 334 and a hydrogen-bonding functional group value of $2.99\times10^{-3}$ mol/g.

The obtained alkoxysilane compound 5 parts by weight was mixed with the curable resin composition solution produced in Example 14 100 parts by weight to produce a curable resin composition.

A liquid crystal display element was produced in the same manner as Example 14, except the obtained curable resin composition was used.

(Example 19)

An alkoxysilane compound was produced by causing reaction of 3-isocyanatotrimethoxysilane 1 mol and 2-hydroxyethyl methacrylate 1 mol at 70°C for 12 hours in the presence of a tin catalyst. The alkoxysilane compound had a molecular weight of about 271 and a hydrogen-bonding functional group value of $3.69\times10^{-3}$ mol/g.

The obtained alkoxysilane compound 5 parts by weight was mixed with the curable resin composition solution produced in Example 14 100 parts by weight to produce a curable resin composition.

A liquid crystal display element was produced in the same manner as Example 14, except the obtained curable resin composition was used.

(Comparative Example 7)

The curable resin composition solution produced in Example 14 (the curable resin composition before Comperan E 202 was added) alone was used as a curable resin composition.
A liquid crystal display element was produced in the same manner as Example 14, except the obtained curable resin composition was used.

(Comparative Example 8)

A curable resin composition was produced by mixing 3-glycidoxypropyltrimethoxysilane 3 parts by weight to the curable resin composition solution produced in Example 14 100 parts by weight.
A liquid crystal display element was produced in the same manner as Example 14, except the obtained curable resin composition was used.

(Comparative Example 9)

A curable resin composition was produced by mixing 3-methacryloxypropyltrimethoxysilane 3 parts by weight to the curable resin composition solution produced in Example 14 100 parts by weight.
A liquid crystal display element was produced in the same manner as Example 14, except the obtained curable resin composition was used.

(Evaluation)

The adhesive property and moisture-resistant adhesive property of the curable resin compositions and color inequality of the liquid crystal display elements obtained in Examples 14 to 19 and Comparative Examples 7 to 9 were evaluated by the following methods. The results are shown in Table 4.

(1) Adhesive property evaluation

Polymer beads with an average particle diameter 5 μm (Micropearl SP, manufactured by Sekisui Chem. Co., Ltd.) 3 parts by weight was dispersed in each of the obtained curable resin composition 100 parts by weight by a planetary type stirring apparatus to obtain a uniform liquid and a small amount of the liquid was put on a center part of a slide glass and another slide glass was laid over it and pushed so as to spread the liquid and then, ultraviolet rays of 100 $mW/cm^2$ dose were radiated for 30 seconds. After that, heating at 100°C was carried out for 1 hour to obtain an adhesive test specimen. The obtained test specimen was subjected to the adhesive strength measurement by Autograph (manufactured by Shimadzu Corp.).

(2) Moisture-resistant adhesive property evaluation

The same test specimen as that produced in the adhesive property evaluation was subjected to the adhesive strength measurement by Autograph (manufactured by Shimadzu Corp.) after it was stored at 120°C in saturated vapor of 2 atmospheric pressure for 24 hours.

(3) Color inequality evaluation

With respect to obtained liquid crystal display elements, the color inequality caused in the vicinity of the seal part was observed by eye observation and evaluated according to the following standards.
◎: No color inequality is observed.
○: Color inequality is scarcely observed.
Δ: Color inequality is slightly observed.
×: Color inequality is rather observed.

[Table 4]

| | Adhesive property (N/cm$^2$) | Moisture-resistant adhesive property (N/cm$^2$) | Color inequality evaluation |
|---|---|---|---|
| Example 14 | 392 | 343 | ◎ |
| Example 15 | 451 | 392 | ◎ |
| Example 16 | 353 | 304 | ◎ |
| Example 17 | 363 | 314 | ◎ |
| Example 18 | 402 | 343 | ◎ |
| Example 19 | 441 | 392 | ◎ |
| Comparative Example 7 | 216 | 20 | ◎ |
| Comparative Example 8 | 392 | 314 | × |
| Comparative Example9 | 343 | 294 | × |

(Example 20)

After the curable resin composition obtained in the same manner as Example 14 was sufficiently mixed by three rolls so as to become a uniform liquid, metal-coated fine particles coated with gold (Micropearl AU-206, manufactured by Sekisui Chem. Co., Ltd.) as conductive fine particles 2 parts by weight was added to the curable resin composition 100 parts by weight and the mixture was mixed by a vacuum planetary stirring apparatus to produce a transfer material for a liquid crystal display element.

A liquid crystal display device was produced in the same manner as Example 14, except that the obtained transfer material was applied to the transparent substrates by dispenser application to form patterns for transfer on the electrodes for transfer.
The obtained liquid crystal display element was excellent in transfer property.

(Example 21)

(1) Production of curable resin composition

As resins having radical polymerizable functional groups, bisphenol A type epoxy acrylate (EB 3700, manufactured by Daicel UCB Co., Ltd.) 60 parts by weight and bisphenol A type epoxy resin (Epikote 828, manufactured by Japan Epoxy Resin Co., Ltd.) 10 parts by weight and a photoradical polymerization initiator (IR-651, manufactured by Ciba Specialty Chemicals Inc.) 2 parts by weight were added and heated at 70°C to dissolve the photoradical polymerization initiator and then mixed and stirred by a planetary stirring apparatus to obtain a mixture.

Core-shell structure fine particles (F-351, manufactured by Nippon Zeon Co., Ltd.) 10 parts by weight, spherical silica (SO-C1, manufactured by Admatechs Co., Ltd.) 16 parts by weight, and a heat-curing agent (ADH, manufactured by Otsuka Chemical Co., Ltd.) 2 parts by weight were added to the mixture and mixed and stirred by a planetary stirring apparatus and successively dispersed by ceramic three rolls to obtain a curable resin composition.

(2) Measurement of glass transition temperature of cured product

The obtained curable resin composition was applied in a strip-like thin piece of 5x35x0.35 mm and radiated with ultraviolet rays of 100 mW intensity were radiated for 30 seconds and then further heated at 120°C for 60 minutes to cure the resin composition and a test specimen for measurement was obtained.
The elasticity modulus E' and tanδ were measured by dynamic mechanical analysis (DMA) in a temperature ranging from 20°C to 180°C and the glass transition temperature of the cured product of the curable resin composition was measured to find it was 150°C.

(3) Adhesive test

A glass short fiber spacer with 5 μm size 5 parts by weight was added to and mixed with the obtained curable resin composition 100 parts by weight and a small amount of the mixture was dropped and applied to a non-alkali glass substrate (#1737, manufactured by Corning Inc.) and the same glass substrate was stuck to it in form of a cross. After

ultraviolet rays of 100 mW intensity were radiated for 30 seconds, the bonded glass substrates were further heated at 120°C for 60 minutes to cure the resin composition and obtain a test specimen for measurement.
The respective glass substrates were fixed in chucks arranged up and down and the tensile strength was measured in condition of drawing speed of 5 mm/sec and the measured values were regarded as the adhesive strength. The adhesive strength was 180 $N/cm^2$.

(Comparative Example 10)

As resins having radical polymerizable functional groups, bisphenol A type epoxy acrylate (EB 3700, manufactured by Daicel UCB Co., Ltd.) 60 parts by weight and bisphenol A type epoxy resin (Epikote 828, manufactured by Japan Epoxy Resin Co., Ltd.) 10 parts by weight and a photoradical polymerization initiator (IR-651, manufactured by Ciba Specialty Chemicals Inc.) 2 parts by weight were added and heated at 70°C to dissolve the photoradical polymerization initiator and then mixed and stirred by a planetary stirring apparatus to obtain a mixture.
Spherical silica (SO-C1, manufactured by Admatechs Co., Ltd.) 26 parts by weight, and a heat-curing agent (ADH, manufactured by Otsuka Chemical Co., Ltd.) 2 parts by weight were added to the mixture and mixed and stirred by a planetary stirring apparatus and successively dispersed by ceramic three rolls to obtain a curable resin composition.
The glass transition temperature and the adhesive strength of the cured product of the obtained curable resin composition were measured in the same methods as Example 21 to find that the glass transition temperature was 150°C and the adhesive strength was 80 $N/cm^2$.

(Comparative Example 11)

As resins having radical polymerizable functional groups, propylene oxide-added bisphenol A type epoxy acrylate (3002 A, manufactured by Kyoeisha Chemical Co., Ltd.) 60 parts by weight and bisphenol A type epoxy resin (Epikote 828, manufactured by Japan Epoxy Resin Co., Ltd.) 10 parts by weight and a photoradical polymerization initiator (IR-651, manufactured by Ciba Specialty Chemicals Inc.) 2 parts by weight were added and heated at 70°C to dissolve the photoradical polymerization initiator and then mixed and stirred by a planetary stirring apparatus to obtain a mixture. Core-shell structure fine particles (F-351, manufactured by Nippon Zeon Co., Ltd.) 10 parts by weight, spherical silica (SO-C1, manufactured by Admatechs Co., Ltd.) 16 parts by weight, and a heat-curing agent (ADH, manufactured by Otsuka Chemical Co., Ltd.) 2 parts by weight were added to the mixture and mixed and stirred by a planetary stirring apparatus and successively dispersed by ceramic three rolls to obtain a curable resin composition.
The glass transition temperature and the adhesion strength of the cured product of the obtained curable resin composition were measured in the same methods as Example 21 to find that the glass transition temperature was 100°C and the adhesive strength was 90 $N/cm^2$.

(Example 22)

After the curable resin composition obtained in the same manner as Example 21 was sufficiently mixed by three rolls so as to become a uniform liquid, metal-coated fine particles coated with gold (Micropearl AU 206, manufactured by Sekisui Chem. Co., Ltd.) as conductive fine particles 2 parts by weight was added to the curable resin composition 100 parts by weight mixed by a vacuum planetary stirring apparatus to produce a transfer material for a liquid crystal display element.
As a sealant, the curable resin composition obtained in Example 21 was applied to one of two transparent substrates having transparent electrodes by a dispenser in a manner of drawing a rectangular frame. Further, the obtained transfer material was applied by a dispenser to the other transparent substrate to form a pattern for transfer on the electrode for transfer. Successively, small droplets of a liquid crystal (JC-5004 LA, manufactured by Chisso Corporation) were dropped and applied to the entire face within the frame of the transparent substrate to which the sealant was applied and immediately the other transparent substrate was laid over and ultraviolet rays of 100 $mW/cm^2$ dose were radiated to the seal part and the transfer material for 30 seconds by a high pressure mercury lamp. After that, liquid crystal annealing was carried out at 120°C for 1 hour to carry out heat-curing and a liquid crystal display device was obtained.
The obtained liquid crystal display device was found excellent in transfer property.

(Example 23)

(A) Synthesis of acrylic acid-modified phenol novolak epoxy resin

A liquid phenol novolak type epoxy resin (D.E.N. 431, manufactured by Dow Chemical Co.) 1000 parts, p-methoxyphenol as a polymerization inhibitor 2 parts by weight, triethylamine as a reaction catalyst 2 parts by weight, and acrylic acid 200 parts by weight were refluxed and stirred at 90°C for carrying out reaction for 5 hours while air was blown. The obtained resin 100 parts by weight was filtered through a column filled with a natural bonded material of quartz and kaolin (Silicin V85, manufactured by Hoffman Mineral Co.) 10 parts by weight for adsorbing ionic impurities contained in the reaction product to obtain an acrylic acid-modified phenol novolak epoxy resin (50% partially acrylated).

(B) Synthesis of urethane-modified partially acrylated compound

Trimethylolpropane 134 parts by weight, BHT as a polymerization inhibitor 0.2 parts by weight, dibutyltin dilaurate as a reaction catalyst 0.01 parts by weight, and isophorone diisocyanate 666 parts by weight were refluxed and stirred at 60°C for carrying out reaction for 2 hours. Then, 2-hydroxyethyl acrylate 25.5 parts by weight and glycidol 111 parts by weight were added and while air was blown, the mixture was refluxed and stirred at 90°C for carrying out reaction for 2 hours. The obtained resin 100 parts by weight was filtered through a column filled with a natural bonded material of quartz and kaolin (Silicin V85, manufactured by Hoffman Mineral Co.) 10 parts by weight for adsorbing ionic impurities contained in the reaction product to obtain an urethane-modified partially acrylated compound.

A curable resin composition containing the acrylic acid-modified phenol novolak epoxy resin obtained in (A) 40 parts by weight; the urethane-modified partially acrylated compound obtained in (B) 20 parts by weight; as a latent heat-curing agent, a hydrazide type curing agent (Amicure VDH, manufactured by Ajinomoto Fine Techno Co., Ltd.) 15 parts by weight; as a photoradical polymerization initiator, 2,2-diethoxyacetophenone 1 part by weight; silica particles (average particle diameter 0.5 μm) 23 parts by weight; and γ-glycidoxypropyltrimethoxysilane 1 part by weight was sufficiently mixed by three rolls to be a uniform liquid and a sealant was obtained.

The obtained sealant was applied to one of two transparent substrates having transparent electrodes by a dispenser in a manner of drawing a rectangular frame. Successively, small droplets of a liquid crystal (JC-5004 LA, manufactured by Chisso Corporation) were dropped and applied to the entire face within the frame of the transparent substrate and immediately the other transparent substrate was laid over and ultraviolet rays of 100 $mW/cm^2$ dose were radiated to the seal part and the transfer material for 30 seconds by a high pressure mercury lamp. After that, liquid crystal annealing was carried out at 120°C for 1 hour to carry out heat-curing and a liquid crystal display device was obtained.

(Example 24)

(C) Synthesis of acrylic acid-modified propylene oxide bisphenol A epoxy resin

A liquid polyoxyalkylene bisphenol A diglycidyl ether (EP4000S, Asahi Denka Kogyo K.K) 1440 parts by weight, p-methoxyphenol as a polymerization inhibitor 2 parts by weight, triethylamine as a reaction catalyst 2 parts by weight, and acrylic acid 200 parts by weight were refluxed and stirred at 90°C for carrying out reaction for 5 hours while air was blown. The obtained resin 100 parts by weight was filtered through a column filled with a natural bonded material of quartz and kaolin (Silicin V85, manufactured by Hoffman Mineral Co.) 10 parts by weight for adsorbing ionic impurities contained in the reaction product to obtain an acrylic acid-modified propylene oxide bisphenol A epoxy resin (50% partially acrylated).

A sealant was obtained in the same manner as Example 23, except that the obtained acrylic acid-modified propylene oxide bisphenol A epoxy resin obtained in (C) 20 parts by weight was used in place of the urethane-modified partially acrylated compound obtained in (B) of Example 23 20 parts by weight and a hydrazide type curing agent (NDH, manufactured by Japan Hydrazine Co., Inc.) 15 parts by weight was used in place of the hydrazide type curing agent (Amicure VDH, manufactured by Ajinomoto Fine Techno Co., Ltd.) 15 parts by weight and using the sealant, a liquid crystal display device was produced.

(Comparative Example 12)

A curable resin composition containing an urethane acrylate (AH-600, manufactured by Kyoeisha Chemical Co., Ltd.) 35 parts by weight, 2-hydroxybutyl acrylate 15 parts by weight, isobornyl acrylate 50 parts by weight, and benzophenone 3 parts by weight was mixed to be a uniform liquid and thus obtain a photo-curable sealant and using the sealant, a liquid crystal display device was produced.

(Comparative Example 13)

A curable resin composition containing a bisphenol A epoxy resin (Epikote 828 US, manufactured by Japan Epoxy Resin Co., Ltd.) 50 parts by weight and a hydrazide type curing agent (NDH, manufactured by Japan Hydrazine

Co., Inc.) 25 parts by weight was mixed sufficiently by three rolls to be a uniform liquid and thus obtain a sealant and using the sealant, a liquid crystal display device was produced.

The average coefficient of linear expansion after photo-curing and after photo- and heat-curing, the volume resistance value, the dielectric constant at 100 kHz, and the modulus of elongation of sealants produced in Examples 23 and 24 and Comparative Examples 12 and 13 were evaluated and the color inequality of the obtained liquid crystal display devices was evaluated by the following method.
The results are shown in Table 5.

(Average coefficient of linear expansion after photo-curing and after photo- and heat-curing)

After a sealant was applied thinly and evenly on a polyfluoroethylene substrate, the sealant was cured by ultraviolet rays of 3000 mJ/cm$^2$ dose to produce a photo-cured sample with a size of 15 mm × 4 mm and a thickness of 0.6 mm. Also, after a sealant was applied thinly and evenly on a polyfluoroethylene substrate, the sealant was cured by ultraviolet rays of 3000 mJ/cm$^2$ dose and heat-cured by heating at 120°C for 1 hour to produce a photo-cured sample with a size of 15 mm × 4 mm and a thickness of 0.6 mm.
The average coefficient of linear expansion of the produced photo-cured sample and the photo- and heat-cured sample was measured in measurement conditions: initial temperature: 35°C, heating completion temperature; 150°C, temperature rising rate: 5°C/min, and retention time 0 min: by EXSTAR 6000 TMA/SS manufactured by Seiko Instruments Inc. The average coefficient of linear expansion $\alpha_1$ in a range from a temperature lower than the glass transition temperature by 40°C to a temperature lower than the glass transition temperature by 10°C and the average coefficient of linear expansion $\alpha_2$ in a range from a temperature higher than the glass transition temperature by 10°C to a temperature higher than the glass transition temperature by 40°C of the cured product obtained by curing only by light and the cured product obtained by curing by light and heat were calculated from the obtained values.

(Volume resistance value after curing)

After a sealant was applied thinly and evenly on a chromium-deposited face of a chromium-deposited glass substrate, the sealant was cured by ultraviolet rays to produce an ultraviolet-cured sample with a size of 85 mm × 85 mm and a thickness of 3 mm. Another chromium-deposited glass substrate was put thereon in a manner that the chromium-deposited face was in the ultraviolet-cured product side and load was applied and heat pressure bonding was carried out on a hot plate at 120°C for 1 hour to obtain a test sample. Constant voltage (V(V)) was applied by a constant voltage generation apparatus (PA 36-2A regulated DC power supply, manufactured by Kenwood Corp.) between the chromium-deposited faces of the opposed chromium-deposited glass substrates with a surface area (S (cm$^2$)) of the sealant of the obtained test sample and the electric current (A (A)) flowing in the films was measured by an ammeter (R644C digital multi-meter, manufactured by Advantest Corp.). The film pressure of the sealant was defined as (T (cm)) and the volume resistance (Ω•cm) was calculated according to the following formula:
[Math. 6]

$$\text{Volume resistance } (\Omega\cdot\text{cm}) = (V\cdot S)/(A\cdot T)$$

In this case, the applied voltage was d.c. 500 V and the duration of application was 1 minute.

(Dielectric constant at 100 kHz after curing)

After a sealant was applied thinly and evenly on a glass plate, the sealant was cured to produce a test sample with a size of 60 mm × 60 mm and a thickness of 3 mm. The dielectric constant at 100 kHz frequency was measured by an electrode-non-contact manner (indirect method) using an electrode for dielectric constant measurement (HP16451B, manufactured by Yokokawa HP Co., Ltd.) and a LCR meter (4289A, manufactured by Hewlett-Packard Co., Ltd.) by a method according to ASTM D 150.

(Modulus of elongation after curing)

After a sealant was applied thinly and evenly on a polyfluoroethylene substrate, the sealant was cured by ultraviolet rays to obtain a ultraviolet-cured product with a size of 50 mm × 5 mm and a thickness of 0.5 mm and further thermally cured by heating at 120°C for 1 hour to produce a test sample.

The modulus of elongation of the obtained test sample was measured by using a RSA II manufactured by TA Instruments Ltd. under the conditions: holding distance: 30 mm; temperature conditions: initial temperature: a room temperature, heating completion temperature: 150°C, and temperature rising rate: 5°C/min; data being as taking interval; elasticity lower limit: 10 Pa; lower movement force: 0.008N; measurement frequency: 10 Hz, Strain (E > 108): 0.1%; static/dynamic ratio: 0; upper limit of elongation percentage: 50%; and elongation index: 1.

(Evaluation of color inequality)

The color inequality caused in the liquid crystal of the obtained liquid crystal display device was observed by eye observation after the apparatus was kept at 60°C and 95% RH for 500 hours to evaluate color inequality according to the four grades: ◎ (No color inequality is observed.); ○ (Color inequality is scarcely observed.); △ (Color inequality is slightly observed.); and × (Color inequality is rather observed.). Evaluation was done using five samples for each.

[Table 5]

| | | Example23 | Example24 | Comparative Example 12 | Comparative Example 13 |
|---|---|---|---|---|---|
| Reactive resin composition (part by weight) | acrylic acid-modified phenol novolak epoxy resin | 40 | 40 | - | - |
| | urethane acrylate | - | - | 35 | - |
| | urethane-modified partially acrylated compound | 20 | - | - | - |
| | acrylic acid-modified propylene oxide bisphenol A epoxy resin | - | 20 | - | - |
| | 2-hydroxybutyl acrylate | - | - | 15 | - |
| | bisphenol A epoxy resin | - | - | - | 50 |
| | isobornyl acrylate | - | - | 50 | - |
| | hydrazide type curing agent (VDH) | 15 | - | - | - |
| | hydrazide type curing agent (NDH) | - | 15 | - | 25 |
| | silica particles | 23 | 23 | - | - |

Table continued

| | | Example23 | Example24 | Comparative Example 12 | Comparative Example 13 |
|---|---|---|---|---|---|
| Evaluation | average coefficient of linear expansion $\alpha_1$(/°C) after photo-curing | $2 \times 10^{-4}$ | $2 \times 10^{-4}$ | $9 \times 10^{-5}$ | - |
| | average coefficient of linear expansion $\alpha_2$ (/°C ) after photo-curing | $8 \times 10^{4}$ | $8 \times 10^{-4}$ | $4 \times 10^{-4}$ | - |
| | average coefficient of linear expansion $\alpha_1$ (/°C ) after photo- and heat-curing | $7 \times 10^{5}$ | $8 \times 10^{-5}$ | $8 \times 10^{-5}$ | $3 \times 10^{-5}$ |
| | average coefficient of linear expansion $\alpha_2$ (/°C) after photo- and heat-curing | $2\times10^{-4}$ | $3\times10^{-4}$ | $3\times10^{-4}$ | $1\times10^{-4}$ |
| | volume resistance (Ω·cm) | $1.5\times10^{13}$ | $2.1\times10^{13}$ | $1.2\times10^{13}$ | $3.0\times10^{13}$ |
| | dielectric constant (100kHz) | 3.4 | 3.2 | 3.4 | 3.1 |
| | modulus of elongtion (MPa) | 2000 | 1000 | 2000 | 4000 |
| | color inequality evaluation (initial) | ◎○◎○◎ | ◎○◎○◎ | ○○○○○ | ××××× |
| | color inequality evaluation (after moisture-resistant test) | ◎○◎○◎ | ◎○◎○◎ | ××××× | ××××× |

(Example 25)

After the curable resin composition obtained in the same manner as Example 23 was sufficiently mixed by three rolls so as to become a uniform liquid, metal-coated fine particles coated with gold (Micropearl AU-206, manufactured by Sekisui Chem. Co., Ltd.) as conductive fine particles 2 parts by weight was added to the curable resin composition 100 parts by weight and the mixture was mixed by a vacuum planetary stirring apparatus to produce a transfer material for a liquid crystal display element.

A liquid crystal display device was produced in the same manner as Example 23, except that the obtained transfer material was applied to the transparent substrates by dispenser application to form patterns for transfer on the electrodes for transfer.

The obtained liquid crystal display device was subjected to color inequality evaluation in the same manner and the color inequality caused in the liquid crystal by eye observation to obtain O or better evaluation result. The transfer property was found also excellent.

(Example 26)

A liquid phenol novolak type epoxy resin (D.E.N. 431, manufactured by Dow Chemical Co.) 1000 parts, p-methoxyphenol as a polymerization inhibitor 2 parts by weight, triethylamine as a reaction catalyst 2 parts by weight, and acrylic acid 200 parts by weight were refluxed and stirred at 90°C for carrying out reaction for 5 hours while air was

blown. The obtained resin 100 parts by weight was filtered through a column filled with a natural bonded material of quartz and kaolin (Silicin V85, manufactured by Hoffman Mineral Co.) 10 parts by weight for adsorbing ionic impurities contained in the reaction product to obtain an acrylic acid-modified phenol novolak epoxy resin (50% partially acrylated).

Trimethylolpropane 134 parts by weight, BHT as a polymerization inhibitor 0.2 parts by weight, dibutyltin dilaurate as a reaction catalyst 0.01 parts by weight, and isophorone diisocyanate 666 parts by weight were refluxed and stirred at 60°C for carrying out reaction for 2 hours. Then, 2-hydroxyethyl acrylate 25.5 parts by weight and glycidol 111 parts by weight were added and while air was blown, the mixture was refluxed and stirred at 90°C for carrying out reaction for 2 hours. The obtained resin 100 parts by weight was filtered through a column filled with a natural bonded material of quartz and kaolin (Silicin V85, manufactured by Hoffman Mineral Co.) 10 parts by weight for adsorbing ionic impurities contained in the reaction product to obtain an urethane-modified partially acrylated compound

As a latent heat-curing agent, a hydrazide type curing agent (Amicure UDH, manufactured by Ajinomoto Fine Techno Co., Ltd.) 15 parts by weight; as a photoradical polymerization initiator, 2,2-diethoxyacetophenone 1 part by weight; silica particles (average particle diameter 1.5 μm) 23 parts by weight; and γ-glycidoxypropyltrimethoxysilane 1 part by weight were added to and sufficiently mixed with the obtained acrylic acid-modified phenol novolak epoxy resin 40 parts by weight and urethane-modified partially acrylated compound 20 parts by weight by three rolls to obtain a mixture. The obtained mixture was filtered by a filter of 10 μm (Beki-pore, manufacture by Nichidai Co., Ltd.) at 40°C and 45 $N/cm^2$ pressure to obtain a curable resin composition. The curable resin composition was used as a sealant for a liquid crystal display element.

The obtained sealant was applied to one of two transparent substrates having transparent electrodes by a dispenser in a manner of drawing a rectangular frame. Successively, small droplets of a liquid crystal (JC-5004 LA, manufactured by Chisso Corporation) were dropped and applied to the entire face within the frame of the transparent substrate and immediately the other transparent substrate was laid over and ultraviolet rays of 100 $mW/cm^2$ dose were radiated to the seal part for 30 seconds by a high pressure mercury lamp. After that, liquid crystal annealing was carried out at 120°C for 1 hour to carry out heat-curing and a liquid crystal display device was obtained. The cell gap of the liquid crystal display element was set to be 5 μm.

(Comparative Example 14)

A curable resin composition was produced in the same manner as Example 26, except the filtration by the filter was not carried out and it was used as the sealant for a liquid crystal display element. A liquid crystal display element was produced by the same method as Example 26 using the sealant for a liquid crystal display element.

(Evaluation)

With respect to the sealants for a liquid crystal display element and the liquid crystal display elements obtained in Example 26 and Comparative Example 14, the foreign matter inspection and cell gap evaluation were carried out by the following methods.
The results are shown in Table 6.

(1) Foreign matter inspection

Each sealant for a liquid crystal display element 2 mL was weighed precisely and put on a sieve made of SUS (ϕ75-h20) having 10 μm meshes and acetone was dropped from the upper side at 1.2 mL/min and the number of foreign matters remaining on the sieve was counted by using a magnifier with 16 times magnification. The same operation was carried out for 5 specimens (n = 5) and the average value was calculated.

(2) Cell gap evaluation

Occurrence of the cell gap inequality was investigated by eye observation using a magnifier with 16 times magnification.

[Table 6]

| | Number of foreign matters (pieces) | Occurrence of cell gap inequality |
|---|---|---|
| Example26 | 0 | none |
| Comparative Example 14 | 115.6 | present |

(Example 27)

(1) Synthesis of acrylic acid-modified phenol novolak epoxy resin

A liquid phenol novolak type epoxy resin (D.E.N. 431, manufactured by Dow Chemical Co.) 1000 parts by weight, p-methoxyphenol as a polymerization inhibitor 2 parts by weight, triethylamine as a reaction catalyst 2 parts by weight, and acrylic acid 200 parts by weight were refluxed and stirred at 90°C for carrying out reaction for 5 hours while air was blown. The obtained resin 100 parts by weight was filtered through a column filled with a natural bonded material of quartz and kaolin (Silicin V85, manufactured by Hoffman Mineral Co.) 10 parts by weight for adsorbing ionic impurities contained in the reaction product to obtain an acrylic acid-modified phenol novolak epoxy resin (50% partially acrylated).

(2) Synthesis of urethane-modified partially acrylated compound

Trimethylolpropane 134 parts by weight, BHT as a polymerization inhibitor 0.2 parts by weight, dibutyltin dilaurate as a reaction catalyst 0.01 parts by weight, and isophorone diisocyanate 666 parts by weight were refluxed and stirred at 60°C for carrying out reaction for 2 hours. Then, 2-hydroxyethyl acrylate 25.5 parts by weight and glycidol 111 parts by weight were added and while air was blown, the mixture was refluxed and stirred at 90°C for carrying out reaction for 2 hours. The obtained resin 100 parts by weight was filtered through a column filled with a natural bonded material of quartz and kaolin (Silicin V85, manufactured by Hoffman Mineral Co.) 10 parts by weight for adsorbing ionic impurities contained in the reaction product to obtain an urethane-modified partially acrylated compound

(3) Production of sealant

A curable resin composition comprising the obtained acrylic acid-modified phenol novolak epoxy resin 40 parts by weight; the urethane-modified partially acrylated compound 20 parts by weight; as a latent heat-curing agent, a hydrazide type curing agent (Amicure VDH, manufactured by Ajinomoto Fine Techno Co., Ltd.) 15 parts by weight; as a photoradical polymerization initiator, 2,2-diethoxyacetophenone 1 part by weight; silica particles (average particle diameter 1.5 μm) 23 parts by weight; and γ-glycidoxypropyltrimethoxysilane 1 part by weight was sufficiently mixed by three rolls to be a uniform liquid and a sealant was obtained.

(4) Production of liquid crystal display element

Rectangular alignment films of a polyimide (Sunever SE-7492, manufactured by Nissan Chemical Industries, Ltd.) were formed in prescribed portions of one faces of both two transparent glass substrates having electrodes by flexographic printing. Next, the obtained sealant was applied so as not to be brought into contact with the alignment film of one transparent substrate in a manner of drawing a rectangular frame. Successively, small droplets of a liquid crystal (JC-5004 LA, manufactured by Chisso Corporation) were dropped and applied to the entire face within the frame of the transparent substrate and immediately the other transparent substrate was laid over in a manner that the faces where the alignment films were formed were set face to face and ultraviolet rays of 100 $mW/cm^2$ dose were radiated to the seal part for 30 seconds by a high pressure mercury lamp. After that, liquid crystal annealing was carried out at 120°C for 1 hour to carry out heat-curing and obtain a liquid crystal display device.
When the obtained liquid crystal display element was observed by eye observation, it was confirmed that the sealant and the alignment films did not have contact with each other.

(Comparative Example 15)

A liquid crystal display element was produced in the same manner as Example 27, except that the sealant was formed on the surfaces of the transparent substrates having the transparent electrodes in a manner that the sealant had contact with the alignment films.

To evaluate the color inequality of the liquid crystal display elements produced by Example 27 and Comparative Example 15, the liquid crystal alignment disorder in the vicinity of the sealant was observed by eye observation immediately after production and after an operation test in conditions of 65°C and 95% RH for 1000 hours. The number of the samples was 10.
Consequently, in samples of the liquid crystal display element of Example 27, no color inequality was observed at all, whereas in samples of the liquid crystal display element of Comparative Example 15, some were found having slight color inequality mainly in the peripheral part. Further, when the portions where the color inequality was found among the samples of the liquid crystal display element produced in Comparative Example 15 were analyzed by Tof-sims, the sealant components were observed.

## INDUSTRIAL APPLICABILITY OF THE INVENTION

The invention is capable of providing a curable resin composition which causes no liquid crystal contamination, which are excellent in the adhesive property to a glass, and which causes no cell gap inequality in the case it is used as a sealant for a liquid crystal display element to produce a liquid crystal display element by a one drop fill process, a sealant for a liquid crystal display element, and a liquid crystal display element.

## BRIEF DESCRIPTION OF THE DRAWINGS

[Figure. 1] a partially magnified cross-sectional view showing one example of a liquid crystal display element of the invention
[Figure. 2] a horizontal cross-sectional view showing one example of a liquid crystal display element of the invention
[Figure. 3] a partially magnified cross-sectional view showing one example of a conventional liquid crystal display element

## DESCRIPTION OF THE NUMERALS

10, 30: liquid crystal display element
11, 31: transparent substrate
12, 32: sealant
13, 33: alignment film
14, 34: liquid crystal material

## Claims

1. A curable resin composition,
which contains a curable resin to be cured by light and/or heat and a polymerization initiator, the curable resin being a (meth)acrylic acid-modified epoxy resin obtainable by reaction of a crystalline epoxy resin and (meth) acrylic acid.

2. The curable resin composition according to claim 1,
wherein the (meth)acrylic acid-modified epoxy resin is crystalline.

3. The curable resin composition according to claim 1 or 2,
wherein the (meth)acrylic acid-modified epoxy resin has a melting point of 80°C or lower.

4. The curable resin composition according to claim 1, 2 or 3,
wherein the (meth)acrylic acid-modified epoxy resin contains 5 to 10 sulfur atoms and oxygen atoms in total in the resin skeleton.

5. The curable resin composition according to claim 1, 2, 3 or 4,
wherein the (meth)acrylic acid-modified epoxy resin has a value of 0.08 to 0.14 calculated by dividing the total number of the sulfur atoms and oxygen atoms in the resin skeleton by the total number of atoms.

6. A curable resin composition,
which contains a curable resin to be cured by light and/or heat and a polymerization initiator, the polymerization initiator is a radical polymerization initiator having a radical polymerization initiating group to be dissociated into two active radical species by light and/or heat radiation and a hydrogen-bonding functional group in one molecule.

7. The curable resin composition according to claim 6,
wherein both of two active radical species produced by dissociation of the radical polymerization initiating group by light and/or heat radiation respectively have at least one hydrogen-bonding functional group.

8. The curable resin composition according to claim 6 or 7,

wherein the radical polymerization initiator further has two or more reactive functional groups in one molecule.

**9.** The curable resin composition according to claim 8,
wherein both of two active radical species produced by dissociation of the radical polymerization initiating group by light and/or heat radiation respectively have at least one hydrogen-bonding functional group and at least one reactive functional group in one molecule.

**10.** The curable resin composition according to claim 6, 7, 8 or 9,
wherein the radical polymerization initiating group has the structure represented by the following general formula (1):

[Chemical formula 1]

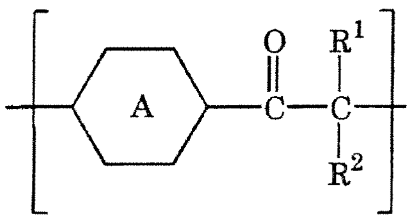

(1)

in the formula (1), $R^1$ and $R^2$ respectively represent a hydrogen atom, a hydroxyl group, an alkyl group having 1 to 6 carbon atoms, an alkoxy group having 1 to 6 carbon atoms or a phenyl group, and

[Chemical formula 2]

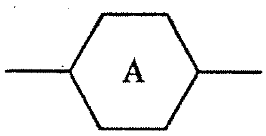

represents an aromatic ring optionally having an alkyl group having 1 to 6 carbon atoms or a halogen group.

**11.** The curable resin composition according to claim 6, 7, 8, 9 or 10,
wherein at least one of the reactive functional groups is a (meth)acryl group and/or a cyclic ether group.

**12.** The curable resin composition according to claim 6, 7, 8, 9, 10 or 11,
wherein the hydrogen-bonding functional group is an urethane group and/or a hydroxyl group.

**13.** The curable resin composition according to claim 6, 7, 8, 9, 10, 11 or 12,
wherein the radical polymerization initiator has a number average molecular weight of 300 or higher.

**14.** The curable resin composition according to claim 6, 7, 8, 9, 10, 11, 12 or 13,
wherein the radical polymerization initiator has a molar absorbance coefficient of 200 to 10,000 $M^{-1}\cdot cm^{-1}$ at 350 nm measured in acetonitrile.

**15.** The curable resin composition according to claim 14,
wherein the radical polymerization initiator has a molar absorbance coefficient of 100 $M^{-1}\cdot cm^{-1}$ or lower at 430 nm measured in acetonitrile.

**16.** A curable resin composition,
which contains a curable resin to be cured by light and/or heat, a polymerization initiator and an adhesive aid, the adhesive aid being an alkoxysilane compound having a molecular weight of 500 or higher and/or an alkoxysilane

compound having a molecular weight of 200 or higher and a hydrogen-bonding functional group value of $2\times10^{-3}$ to $7\times10^{-3}$ mol/g.

**17.** The curable resin composition according to claim 16,
wherein the alkoxysilane compound has at least one polymerizable functional group and/or reactive functional group.

**18.** The curable resin composition according to claim 17,
wherein the polymerizable functional group and/or the reactive functional group is at least one selected from the group consisting of an epoxy group, an acryloyl group and a methacryloyl group.

**19.** A curable resin composition,
which contains a curable resin to be cured by light andior heat, a polymerization initiator and a resin fine particle, the resin fine particle having a core particle made of a resin having rubber elasticity and a glass transition temperature of -10°C or lower and a shell layer made of a resin having a glass transition temperature of 50 to 150°C, being formed on the surface of the core particle, a cured product having a glass transition temperature of 120°C or higher measured by dynamic mechanical analysis (DMA) under conditions of temperature rising rate of 5°C/min and of a frequency of 10 Hz.

**20.** The curable resin composition according to claim 19,
wherein the resin fine particle has an average particle diameter of 0.01 to 5 μm.

**21.** The curable resin composition according to claim 19 or 20,
wherein the resin having rubber elasticity and a glass transition temperature of -10°C or lower is a polymer of a (meth) acrylic monomer.

**22.** The curable resin composition according to claim 19, 20 or 21,
which has an adhesive strength of 150 $N/cm^2$ or higher in the case of being used for adhesion of glass substrates and being cured.

**23.** A curable resin composition,
which contains a curable resin to be cured by light and/or heat, a polymerization initiator and an inorganic particle having an average particle diameter of 1 μm or smaller, the average coefficient of linear expansion $\alpha_1$ being $1\times10^{-4}$ to $5\times10^{-4}$/°C in a range from a temperature lower than a glass transition temperature of the cured product cured only by light by 40°C to a temperature lower than the glass transition temperature by 10°C and an average coefficient of linear expansion $\alpha_2$ being $2\times10^{-4}$ to $1\times10^{-3}$/°C in a range from a temperature higher than the glass transition temperature by 10°C to a temperature higher than the glass transition temperature by 40°C.

**24.** A curable resin composition,
which contains a curable resin to be cured by light and/or heat, a polymerization initiator and an inorganic particle having an average particle diameter of 1 μm or smaller, the average coefficient of linear expansion $\alpha_1$ being $5\times10^{-3}$ to $1\times10^{-4}$/°C in a range from a temperature lower than a glass transition temperature of the cured product cured by light and heat by 40°C to a temperature lower than the glass transition temperature by 10°C and an average coefficient of linear expansion $\alpha_2$ being $1\times10^{-4}$ to $3\times10^{-4}$/°C in a range from a temperature higher than the glass transition temperature by 10°C to a temperature higher than the glass transition temperature by 40°C.

**25.** The curable resin composition according to claim 23 or 24,
wherein a blending amount of the inorganic particle is 10 to 20 parts by weight to the curable resin 100 parts by weight.

**26.** A curable resin composition,
which contains a particle having a particle diameter equal to or larger than a distance between substrates of an aimed liquid crystal display element in a content of 30% by weight or lower.

**27.** A method of producing a curable resin composition,
which comprises a step of filtering using a filter after mixing a component composing the curable resin composition.

**28.** The method of producing a curable resin composition according to claim 27,
wherein the filter has capture efficiency of 70% or higher of a particle having a particle diameter equal to or larger than a distance between substrates of the aimed liquid crystal display element.

**29.** The method of producing a curable resin composition according to claim 27 or 28, wherein the filter has air flow resistance of 10 mm $H_2O$ or higher in the case air is passed at pressure of 4.6 $N/cm^2$ and at a flow rate of 2 L/min.

**30.** A sealant for a liquid crystal display element, which comprises a curable resin composition according to claim 1, 2, 3, 4, 5, 6, 7, 8, 9, 10, 11, 12, 13, 14, 15, 16, 17, 18, 19, 20, 21, 22, 23, 24, 25 or 26.

**31.** An end-sealant for a liquid crystal display element, which comprises a curable resin composition according to claim 1, 2, 3, 4, 5, 6, 7, 8, 9, 10, 11, 12, 13, 14, 15, 16, 17, 18, 19, 20, 21, 22, 23, 24, 25 or 26.

**32.** A transfer material for a liquid crystal display element, which contains the curable resin composition according to claims 1, 2, 3, 4, 5, 6, 7, 8, 9, 10, 11, 12, 13, 14, 15, 16, 17, 18, 19, 20, 21, 22, 23, 24, 25 or 26 and a conductive fine particle.

**33.** A liquid crystal display element, which is obtainable by using at least one of the sealant for a liquid crystal display element according to claim 30, the end-sealant for a liquid crystal display element according to claim 31 and the transfer material for a liquid crystal display element according to claim 32.

**34.** A liquid crystal display element, wherein a pair of transparent substrates with an alignment layer formed respectively at least partially in one face are placed opposite to set the faces with the alignment layer formed respectively on the opposite to each other in a certain gap via a sealant formed to surround a peripheral part of the outer circumference, and a liquid crystal material is enclosed in a space formed by the transparent substrates and the sealant, and the alignment layer and the sealant are not brought into contact with each other.

[Figure. 1]

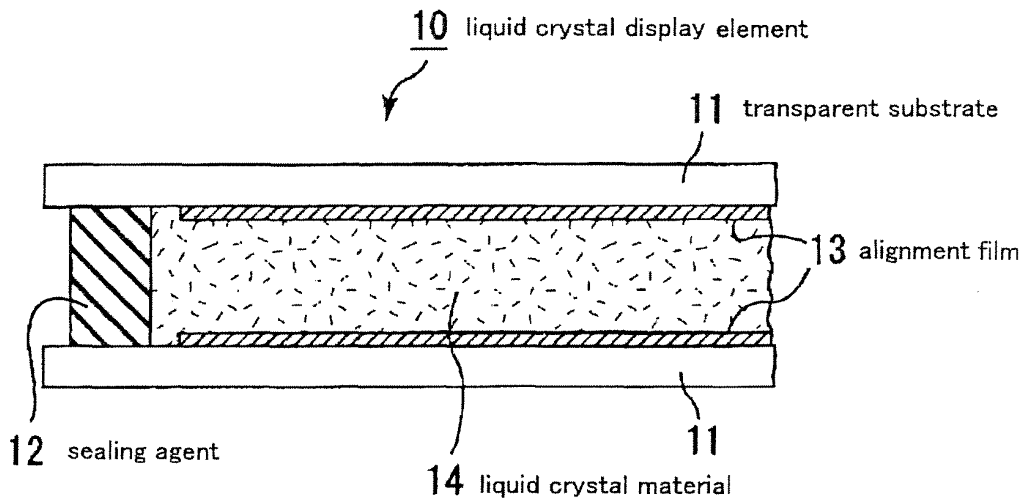


[Figure. 2]

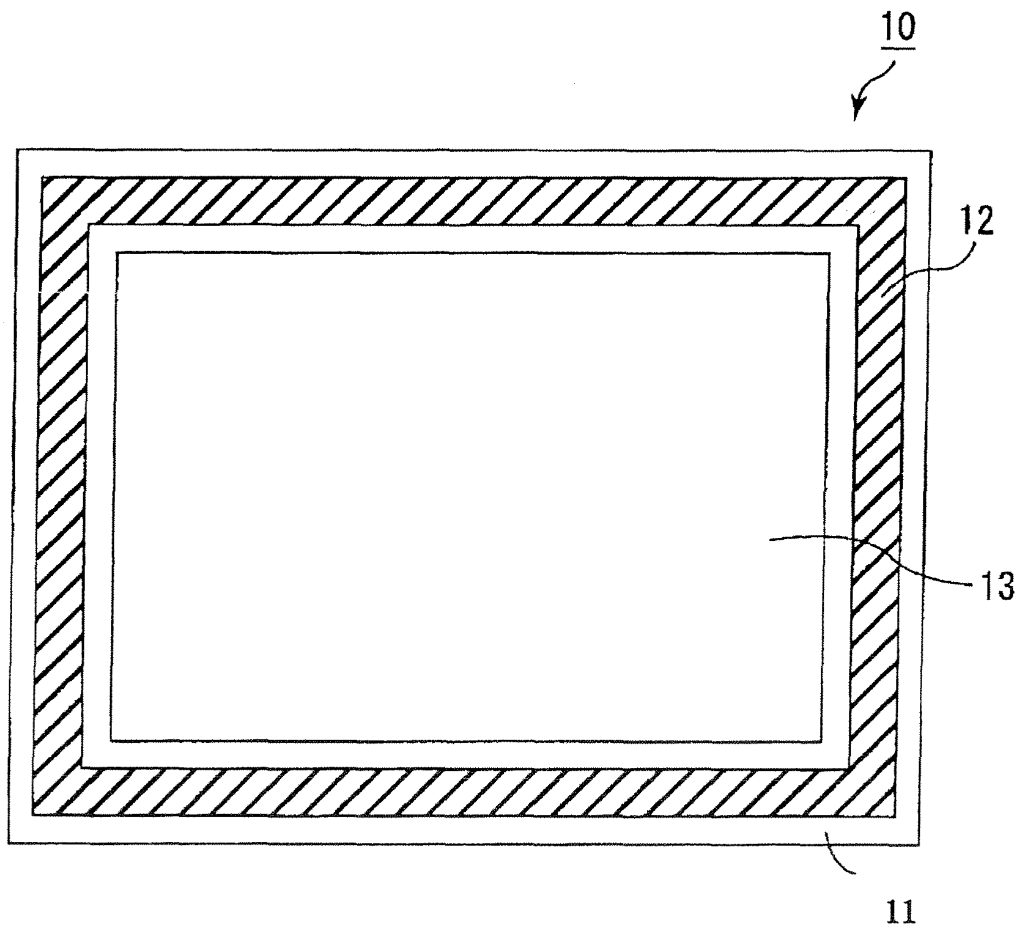

[Figure. 3]

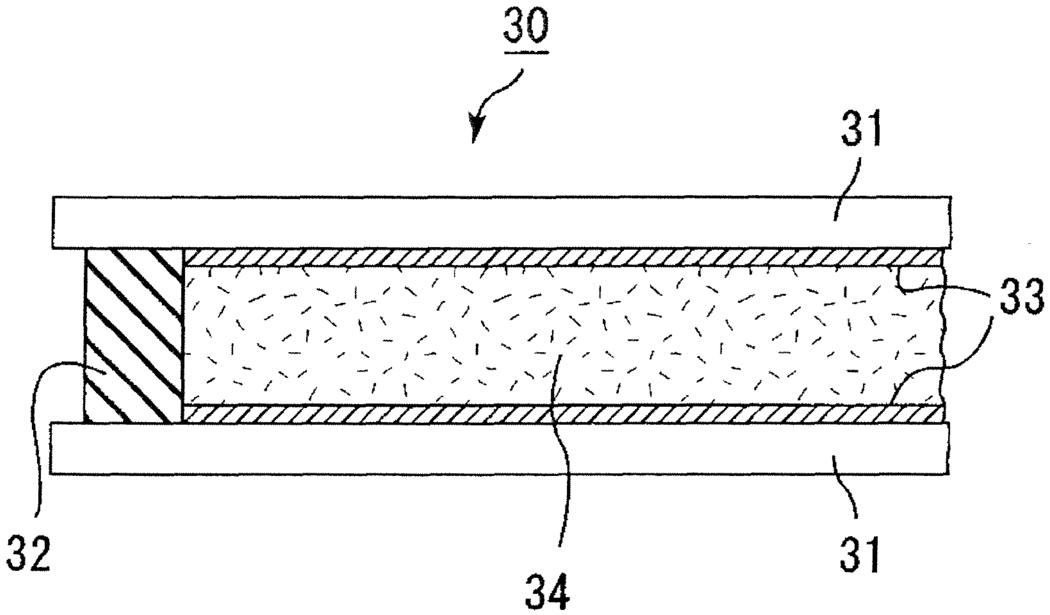

**INTERNATIONAL SEARCH REPORT**

International application No.
PCT/JP2004/007811

A. CLASSIFICATION OF SUBJECT MATTER
Int.Cl[7] C08G59/17, C08F299/02, G02F1/1339

According to International Patent Classification (IPC) or to both national classification and IPC

B. FIELDS SEARCHED

Minimum documentation searched (classification system followed by classification symbols)
Int.Cl[7] C08G59/00-59/72, C08F299/02-299/08, G02F1/1339

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 60-221417 A1 (Nippon Kayaku Co., Ltd.), 06 November, 1985 (06.11.85), Full text (Family: none) | 1-5 |
| X | JP 1-296241 A1 (Unitika Ltd.), 29 November, 1989 (29.11.89), Full text (Family: none) | 1-5 |
| X | JP 3-710 A1 (Nippon Shokubai Kagaku Kogyo Co., Ltd.), 07 January, 1991 (07.01.91), Full text (Family: none) | 1-5 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 September, 2004 (28.09.04) | 19 October, 2004 (19.10.04) |
| Name and mailing address of the ISA/ Japanese Patent Office | Authorized officer |
| Facsimile No. | Telephone No. |

Form PCT/ISA/210 (second sheet) (January 2004)

INTERNATIONAL SEARCH REPORT

International application No.
PCT/JP2004/007811

C (Continuation). DOCUMENTS CONSIDERED TO BE RELEVANT

| Category* | Citation of document, with indication, where appropriate, of the relevant passages | Relevant to claim No. |
|---|---|---|
| X | JP 3-244615 A1 (Nippon Kayaku Co., Ltd.), 31 October, 1991 (31.10.91), Full text (Family: none) | 1-5 |
| X | JP 5-140264 A1 (Dainippon Ink And Chemicals, Inc.), 08 June, 1993 (08.06.93), Full text (Family: none) | 1-5 |
| X | JP 6-332169 A1 (Unitika Ltd.), 02 December, 1994 (02.12.94), Full text (Family: none) | 1-5 |
| X | JP 9-157340 A1 (Kyoeisha Kagaku Kabushiki Kaisha), 17 June, 1997 (17.06.97), Full text (Family: none) | 1-5 |
| X | JP 10-3084 A1 (Sumitomo Bakelite Co., Ltd.), 06 January, 1998 (06.01.98), Full text (Family: none) | 1-5 |
| X | JP 10-251499 A1 (Hitachi Chemical Co., Ltd.), 22 September, 1998 (22.09.98), Full text (Family: none) | 1-5 |
| X | JP 10-292096 A1 (Nippon Oil Co., Ltd.), 04 November, 1998 (04.11.98), Full text (Family: none) | 1-5 |
| X | JP 2000-336144 A1 (Mitsubishi Gas Chemical Co., Inc.), 05 December, 2000 (05.12.00), Full text (Family: none) | 1-5 |
| X | JP 2003-119249 A1 (Mitsui Chemicals, Inc.), 23 April, 2003 (23.04.03), Full text (Family: none) | 1-5 |
| X | JP 2003-26762 A1 (Nippon Steel Chemical Co., Ltd.), 29 January, 2003 (29.01.03), Full text (Family: none) | 1-5 |

Form PCT/ISA/210 (continuation of second sheet) (January 2004)

**INTERNATIONAL SEARCH REPORT**

International application No.
PCT/JP2004/007811

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2004-61925 A1 (Nippon Kayaku Co., Ltd.), 26 February, 2004 (26.02.04), Full text (Family: none) | 1-5 |

Form PCT/ISA/210 (continuation of second sheet) (January 2004)

**INTERNATIONAL SEARCH REPORT**

International application No.
PCT/JP2004/007811

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
(See extra sheet.)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-5

**Remark on Protest**

☐ The additional search fees were accompanied by the applicant's protest.

☐ No protest accompanied the payment of additional search fees.

Form PCT/ISA/210 (continuation of first sheet (2)) (January 2004)

**INTERNATIONAL SEARCH REPORT**

International application No.
PCT/JP2004/007811

Continuation of Box No.III of continuation of first sheet(2)

Claims 1-25 relate to a curing resin composition containing a curing resin which is photo-curing and/or heat-curing and a polymerization initiator as defined in claim 1, and thus they are considered to satisfy the requirement of unity of invention. <Group 1>

Meanwhile, claim 26 relates to a resin composition containing particles having a specific particle diameter <Group 2>; claim 27 relates to a method for producing a resin composition having a filtering step <Group 3>; and claim 34 relates to a liquid crystal display device itself <Group 4>.

These Groups 2-4 are not considered to be linked with one another, nor has any relationship with Group 1. Consequently, this international application is considered to contain four inventions.

The following claims will be further examined in detail.

Claims 1-5 <Group 1A>
Claims 6-15 <Group 1B>
Claims 16-18 <Group 1C>
Claims 19-22 <Group 1D>
Claim 23 <Group 1E>
Claims 24-25 <Group 1F>

The technical feature common to claims 1-25 is a curing resin composition containing a curing resin which is photo-curing and/or heat-curing and a polymerization initiator, which composition is defined in claim 1.

The international search, however, has revealed that such a resin composition using a (meth)acrylate-modified epoxy resin obtained by reacting a crystalline epoxy resin with a (meth)acrylate as defined in the present invention is not novel since it is disclosed in document JP 2003-119249 A (Mitsui Chemicals, Inc.) 23 April, 2003 (23.04.03), the full text.

Consequently, the common technical feature is not a special technical feature within the meaning of PCT Rule 13.2, second sentence, since the compositions of claim 1 and claims 2-5 referring to claim 1 make no contribution over the prior art.

There is therefore no technical feature common to all the claims. Since there is no other common feature which can be considered as a special technical feature within the meaning of PCT Rule 13.2, second sentence, no technical relationship within the meaning of PCT Rule 13 between the different inventions can be seen.

Consequently, it appears that the above Groups 1A-1F do not satisfy the requirement of unity of invention.

Form PCT/ISA/210 (extra sheet) (January 2004)